(19) Europäisches Patentamt / European Patent Office / Office européen des brevets

(11) **EP 4 451 162 B1**

(12) **EUROPEAN PATENT SPECIFICATION**

(45) Date of publication and mention
of the grant of the patent:
**04.02.2026 Bulletin 2026/06**

(21) Application number: **23168284.0**

(22) Date of filing: **17.04.2023**

(51) International Patent Classification (IPC):
*G06F 30/15* *(2020.01)*  *G06F 30/17* *(2020.01)*
*G06F 30/27* *(2020.01)*  *G06F 111/10* *(2020.01)*
*G06F 113/08* *(2020.01)*  *G06F 119/06* *(2020.01)*
*G06F 119/14* *(2020.01)*  *G06F 123/02* *(2023.01)*

(52) Cooperative Patent Classification (CPC):
**G06F 30/17; G06F 30/15; G06F 30/27;**
G06F 2111/10; G06F 2113/08; G06F 2119/06;
G06F 2119/14; G06F 2123/02; G06N 3/0442;
G06N 3/09

(54) **DETERMINING AND REDUCING POWER LOSS OF A VEHICLE**

BESTIMMUNG UND REDUZIERUNG DES LEISTUNGSVERLUSTES EINES FAHRZEUGS

DÉTERMINATION ET RÉDUCTION DE LA PERTE DE PUISSANCE D'UN VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**23.10.2024 Bulletin 2024/43**

(73) Proprietor: **Aerotune GmbH**
**24943 Flensburg (DE)**

(72) Inventor: **Schluricke, Sebastian**
**24943 Flensburg (DE)**

(74) Representative: **Betten & Resch**
**Patent- und Rechtsanwälte PartGmbB**
**Maximiliansplatz 14**
**80333 München (DE)**

(56) References cited:
CN-A- 115 195 724  DE-A1- 19 619 899
US-A1- 2013 080 018  US-A1- 2019 354 644

**Description**

TECHNICAL AREA

The present application generally relates to the field of determining a power loss of a moving vehicle, the power loss being for example due to mechanical inefficiency, roll resistance, and wind resistance, the vehicle being for example a road bike.

BACKGROUND

Several factors contribute to the overall power loss of a vehicle, such as mechanical inefficiency, roll resistance, and wind resistance. The most important among those three factors is typically the wind resistance. Wind resistance is largely determined by the drag force coefficient *(CdA),* which is therefore an important factor contributing to the overall power loss of a moving vehicle. In theory, the *CdA* is computed as a product of a drag coefficient (Cd) and a frontal surface area (A). In practice, the determination of the *CdA* value of a moving vehicle in real-time is however difficult. Several ways to determine the *CdA* value are known and described in the following.

WO 2007/051108 A2 describes a multi-function air data sensor that determines a body's angle of attack, static air pressure, total air pressure, mach number, static air temperature and true air speed in one device using pressure and temperature readings. The air data sensor includes a probe that protrudes into an airflow to collect data, a base plate for attaching the probe to a body, and an electronics housing including electronics for interpreting the data collected from the probe.

WO 2017/197524 A1 describes monitoring fluid-dynamic drag on an object, such as a bicycle, ground vehicle, watercraft, aircraft, or a portion of a wind turbine. An array of sensors obtains sensor readings for example indicating: power input for propelling the object; air speed and direction relative to motion of the object; and ground speed of the object. Sensor readings may also indicate: temperature; elevation and humidity for providing a measurement of air density. Sensor readings may also indicate inclination angle and forward acceleration. Processing circuitry determines a coefficient of drag area based on the sensor readings and optionally one or more stored parameters, according to a predetermined relationship. A pitot-tube-based apparatus for measuring fluid speed and direction is also provided. Methods for dynamic in situ calibration of the pitot-tube apparatus, and of adjusting correction factors applied to correct measurement errors of this apparatus are also provided. Rolling resistance is determined based on vibration measurement and stored data related to previously observed vibrations and known rolling resistance. Accordingly, calibration methods are described but these are all static, i.e. based on previously observed data, and not solved dynamically.

WO 2007/038278 A2 describes an apparatus comprising a suite of sensors for measuring instant static and dynamic pressure and the speed and acceleration of a vehicle, such as a bicycle. A microprocessor receives data from the sensors and calculates power expended by the rider or other power source by finding the total of all forces impinging upon the vehicle and rider, therefore multiplying by the speed of the ground vehicle. In some embodiments, accuracy is improved by calibration techniques, user input of data, or temperature compensation of certain factors. Other data, such as wind speed, distance travelled, altitude, or surface grade may be presented to the user. In one embodiment data is stored for later analysis.

US 8,612,165 B2 describes a method and system for determining an aerodynamic drag area *CdA* of a moving vehicle, for example a bicycle, in dependence upon the airflow yaw direction and speed without the use of a wind tunnel. The vehicle is equipped with sensors for collecting time-stamped values indicative of the vehicle speed, propulsion force, airflow speed and yaw angle of the airflow at various points during the trip. The trip data are then processed using successively refined hypotheses regarding the determination of *CdA* as a function of the yaw angle to generate a plurality of elevation profiles for the travelled path. The generated elevation profiles are then evaluated based on available route elevation information to select a correct dependence of the aerodynamic drag area upon the yaw angle of the airflow.

For example, for a bicycle, several procedures are common to determine the *CdA* of a moving bicycle: (i) wind tunnel measurement on the cycling track (bicycle), (ii) measurement in the field and subsequent calculation using a mathematical model, (iii) using a real-time measuring instrument for the *CdA* value, and (iv) using a computer simulation.

Most of the conventional technologies, e.g., those mentioned before, determine *CdA* and approximate the total power loss of a moving vehicle based on the law of conservation of energy. They typically use a simplified analytical model, which simplifies evaluation of the model, which does however lead to inaccuracies due to a linearization of the acceleration. Experimental data obtained from such a model will be used in the evaluation in the following to compare the accuracy of such conventional technology with the improved accuracy achieved by the technology for determining power loss disclosed herein.

The technologies described above have several shortcomings:
The procedures listed to approximate the *CdA* for the example of a moving bicycle have certain inaccuracies and limitations to be deployed in practice. Instruments for measuring *CdA* value in isolation, i.e. independently of other parameters that determine total power loss, in real-time are inherently afflicted with large inaccuracy. Accordingly, methods for estimating the power loss that are largely based on the *CdA* are inaccurate as well. None of the known methods solves the ordinary differential equation, ODE, which is Newton's equation of motion, correctly. In all systems, a linear or constant acceleration is assumed to simplify the ODE in such a way that an algebraic resolution according to the *CdA* value is possible. The assumption that the acceleration is constant or linear leads to systematic errors and for which also the magnitude of error cannot be estimated precisely, as this requires the solution of the ODE. Furthermore, none of the above described methods is able to accurately determine rolling resistance coefficient *(Crr)* and mechanical efficiency coefficient, sometimes also referred eta, but herein referred to as *Cdl*, which refers to a coefficient for power loss in the drivetrain. These factors are typically measured separately from *CdA*, e.g. using a test bench or laboratory and therefore cannot significantly boost the accuracy when determining the power loss of a moving vehicle in real-time in the field.

From the point of view of measurement techniques, none of the methods is able to determine the values of a rolling and road resistance coefficient *(Crr)* and mechanical efficiency *(Cdl)* precisely. Furthermore, none of the described methods considers the influence of the geometry of the vehicle on the wind speed measurement.

From the perspective of the measurement process and optimization procedure, all the above described technologies are focussed on measuring the *CdA* value. There is no or little support, for the accurate determination of the rolling or road resistance *(Crr)* and mechanical efficiency *(Cdl)* which also significantly contribute to power loss. None of the methods provides any assistance on how to change the geometry or equipment to reduce power loss due those individual factors or overall power loss.

Conventional ways of optimizing, i.e. reducing, power loss of a moving vehicle is based on repeatedly determining the *CdA*, e.g. using one of the above methods, and using trial and error by changing the geometry of the vehicle, the position of the driver of the vehicle, and/or components mounted on the vehicle.

SUMMARY

The technology described herein solves the above problems using a computer-implemented method 100 for generating one or more training data items of a training data set to train a machine-learning model for determining a power loss of a moving vehicle, the method comprising the steps of claim 1.

In an embodiment of the method 100 for generating one or more training data items, the initial values include an initial speed $v_0$ [m/s] at time t=0 of the moving vehicle. The step of generating a time series of values of the parameters can comprise calculating 140 a time series with a time distance $\Delta t$ of output values of a speed v and a distance x of the moving vehicle based on the physics model of motion. The physics model of motion can be based on Newton's equation of motion, which describes an acceleration $\ddot{x}$ of the moving vehicle as a nonlinear differential equation as follows:

$$\ddot{x} = \frac{(P \cdot C_{dl})}{\dot{x} \cdot m} - g \cdot (C_{rr} \cdot \cos(\alpha) - \sin(\alpha)) - \frac{\rho \cdot C_{dA} \cdot (\dot{x} + v_w)^2}{2 \cdot m}$$

In an embodiment of the method 100, this differential equation can be solved using numerical analysis.

In an embodiment of the method 100, the numerical analysis is based on solving ordinary differential equations.

In contrast to conventional methods, which are based on the physics law of conservation of energy, the use of a physics model based on Newton's equation of motion enables the technology presented herein to provide predictions with much higher accuracy. The complexity of evaluating the physics model and its simulation using numerical analysis is encountered at the time when training data items are generated and not at the time when the actual prediction is done based on the deployed and trained ML-model. Furthermore, the results of the simulation of the physics model presented herein are completely accurate since these results are based on synthetically generated values of parameters *CdA, Crr,* and *Cdl,* said parameters being an input of the physics simulation based on Newton's equation of motion. In contrast, some conventional methods determine approximations of the power loss and *CdA* as a result from of the used model of the law of conservation of energy with the simplification of a linear acceleration, so that measurement errors already occur here due to the simplification.

In an embodiment of the method 100 for generating one or more training data items, the second parameters include one or more of:

- *P* : power [W] applied to propel the moving vehicle,
- $\dot{x}$ : vehicle speed [m/s],
- *vw* : effective wind speed [m/s in moving direction of the moving vehicle]
- m : mass [kg] of moving system, including the moving vehicle and a driver of the moving vehicle,
- *g* : gravitational acceleration [m/s$^2$],
- $\rho$ : air density in [kg/m$^3$],

- $\alpha$ : inclination angle [rad].

In an embodiment of the method 100 for generating one or more training data items, the predetermined values of the first parameters are selected 131 from a range of values observable in a laboratory or wind tunnel;

In an embodiment of the method 100 for generating one or more training data items, the values of second parameters are obtained 132 from one or more of structured testing, measurement in the field, databases including environmental data, or through simulation or interpolation of data obtained therefrom;

In an embodiment of the method 100 for generating one or more training data items, the ordinary differential equations are solved using a numerical differential equation solver, which is optionally implemented according to an algorithm of Runge-Kutta or Dormand-Prince.

In an embodiment of the method 100 for generating one or more training data items, method 100 comprises the step of storing 140 the generated training data item in a database.

In an embodiment of the method 100 for generating one or more training data items, the one or more generative models provide time series of parameter values, the one or generative models including at least of: a power model 620 providing one or more parameters for power applied to propel the moving vehicle; an *Cdl* model 622 providing one or more parameters relevant for power loss in the drivetrain of the moving vehicle; a position model 624 providing one or more parameters relevant for power loss due to wind resistance; and a track model 626, providing one or more parameters relevant for power loss due to rolling resistance and track properties.

In an embodiment of the method 100 for generating one or more training data items, the method 100 further comprising the step: augmenting 160 the training data item by including one or more further attributes, not used as parameters in the simulation using the physics model of motion, to obtain an augmented data item, the further attributes including one or more of: attributes obtained through observation and measurement in the field, including:

- $\delta$: lean angle [rad] if the moving vehicle is a two-wheeler,
- one or more attributes relating to a geometry of the moving vehicle including a position of a driver of the moving vehicle,
- dynamic air pressure specified by an amount of air flow velocity and air flow direction measured by a measurement instrument, which preferably is a pitot tube and mounted on the moving vehicle,

(i) attributes obtained through the one or more generative models or obtained from observation of real physical systems in a laboratory or wind tunnel, including:

- *hcom:* height of centre of mass based on the position of the driver and the lean angle,
- *vwk:* effect of the position of the driver on the dynamic air pressure.

In an embodiment of the method 100 for generating one or more training data items, the method 100 further includes the step of storing 165 the augmented training data item in the database.

In an embodiment of the method 100 for generating one or more training data items, the effect of the position of the driver on the dynamic air pressure is determined through experimentation in a wind tunnel by: varying a geometry of the vehicle or components mounted thereon and/or the position of the driver, and based on a known effective windspeed, determining a relation between the position of the driver and the dynamic air pressure, resulting in the effect of the position of the driver on the dynamic air pressure.

In an embodiment of the method 100 for generating one or more training data items, the generated training item is an accurate training data item and the method further comprises: generating 170 one or more derived training data items by applying to one or more accurate training data items one or more of:

(i) modifying 171 the values of an attribute in the time series of values of the accurate training data item within a range of error, wherein the range of error is predetermined through one or more of an accuracy in measuring the attribute, an error due to interpolation of the attribute if the attribute is obtained from a model, and an error due to discretization of the attribute;
(ii) omitting 172 the attribute or
(iii) replacing 173 the attribute value by a value that indicates that no reliable measurement is available.

In an embodiment of the method 100 for generating one or more training data items, the method 100 further comprises storing 175 the one or more derived training data items in the database.

In an embodiment of the method 100 for generating one or more training data items, the method 100 further comprises the step of determining 180 a statistical distribution of one or more of the *Crr, CdA,* and Cdl values based on one or more training data items having at one or more times in the time series of the training data item, except for values of the

*Crr, CdA,* and *CdI* attributes, equivalent values for all other attributes;

In an embodiment of the method 100 for generating one or more training data items, method 100 further comprises the step of storing 185 information about the statistical distribution in the database.

In an embodiment of the method 100 for generating one or more training data items, values of a same attribute are equivalent, if the values are equal or differ only by a margin within an accuracy threshold of the attribute.

In another embodiment, there is provided a computer-implemented method 300 for determining a power loss of a moving vehicle, the method comprising the steps of claim 8.

In an embodiment of method 300 for determining a power loss of a moving vehicle, the machine-learning model is trained using a training data set generated according to one of the previously described embodiments of a method for generating one or more training data items of the training data set.

In an embodiment of method 300 for determining a power loss of a moving vehicle, training of the machine-learning model occurs in two consecutive phases, a first phase using training data items generated by generative models that provide systematic and synthetically generated attributes values across a plausible range of the respective attribute; a second phase using training data items generated using measurement data or by generative models that provide attribute values with high accuracy, preferably based on interpolation of measurement data.

In an embodiment of method 300 for determining a power loss of a moving vehicle, time series data is normalized to include values of input parameters at intervals at a predetermined time distance $\Delta t$ and covering a predetermined total duration, wherein, preferably, normalization is achieved by interpolation.

In an embodiment of method 300 for determining a power loss of a moving vehicle, the method further comprises: determining 350 an accuracy of one or more values of parameters *Crr, CdA,* and *CdI* value based on a statistical distribution of the respective parameter.

In an embodiment of method 300 for determining a power loss of a moving vehicle, the machine-learning model is one of a multi-layer convolutional neural network, a Neural Ordinary Differential Equations, NODE, model, and a physics informed neural network, PINN; and wherein, if the machine learning-model is a PINN, a loss function is based on a model of motion for determining a velocity of the moving vehicle and weights in the neural network are adjusted based on a difference between the velocity determined by the loss function and an average velocity of obtained from the time series of values of parameters included in a training data item of the training data set.

In an embodiment of method 300 for determining a power loss of a moving vehicle, the input parameters further comprise a measure of dynamic air pressure specified as an amount of air flow velocity and air flow direction, which is measured in real-time by a measurement instrument, which, preferably, is a pitot tube and mounted on the moving vehicle.

In another embodiment, a data processing device is provided comprising a processor adapted to perform the steps of the method 300 for determining power loss of a moving vehicle according to one of the aforementioned embodiments.

In another embodiment, computer program is provided comprising instructions that, when the program is executed by a computer, cause the computer to carry out the steps of the method 300 for determining a power loss of a moving vehicle according to one of the aforementioned embodiments.

In another embodiment, a computer-readable medium comprising instructions that, when executed by a computer, cause the computer to carry out the method 300 for determining a power loss of a moving vehicle according to one the aforementioned embodiments.

In another embodiment, a method 400 of reducing power loss of a moving vehicle is provided, the method repeating the steps using the principle of trial and error: determining 410 the power loss of the moving vehicle according to the method 300 of any one of the aforementioned embodiments, and adjusting 420 one or more of a geometry of the moving vehicle, a position of a driver of the vehicle, and components mounted on the vehicle based on the determined power loss.

The technology disclosed herein can also be embodied in a data processing device comprising a processor adapted to perform the steps of the method for determining the power loss of a moving vehicle according to the methods specified hereinabove.

The technology disclosed herein can also be embodied in a computer program comprising instructions that, when the program is executed by a computer, cause the computer to carry out the steps of the method for determining the power loss of a moving vehicle according to the methods specified hereinabove.

The technology disclosed herein can also be embodied in a computer-readable medium comprising instructions that, when executed by a computer, cause the computer to carry out the method for determining the power loss of a moving vehicle according to the methods specified hereinabove.

The present technology provides one or more advantages and technical effects described hereinabove.

The foregoing general description and the following detailed description are exemplary and explanatory only and are not restrictive of the invention as claimed.

BRIEF DESCRIPTION OF THE DRAWINGS

The foregoing summary as well as the following detailed description of preferred embodiments are better understood when read in conjunction with the appended drawings. For illustrating the invention, the drawings show exemplary details of systems, methods, and experimental data. The information shown in the drawings are exemplary and explanatory only and are not restrictive of the invention as claimed. In the drawings:

Fig. 1 shows an overview flowchart of a method of generating 100 training data, training 200 a machine learning model, determining 300 the power loss of a vehicle, and reducing 400 the same on a concrete moving vehicle.

Fig. 2 shows an example architecture of a system for generating training data, training, and determining a power loss of a moving vehicle base on a trained ML model.

Fig. 3 shows an example architecture of the process and for generating training data, training, and determining a power loss of a moving vehicle base on a trained ML model including architectural components and modules involved.

Fig. 4 shows a flowchart of a computer-implemented method 100 for generating records of data to train a machine-learning model for determining a power loss of a moving vehicle, and storing the records of training data in the database. Optionally, the records can be stored in a database or in a file, such as a CSV-formatted text file. In some embodiments, the records are not stored but are fed directly into a ML-model for training the same.

Fig. 5 shows details of the steps of method 100 related to augmenting a generated training data item.

Fig. 6 shows details of the steps of method 100 related to generating derived training data items.

Fig. 7 shows details of the steps of method 100 related to determining 180 a statistical distribution of one or more of the *Crr, CdA,* and *CdI* values.

Fig. 8 shows a data flow and functional components implementing the steps of the method 100 for generating data records for training a machine-learning model for determining a power loss of a moving vehicle.

Fig. 9A shows a schematic diagram of a training data item and its data fields.

Fig. 9B shows use of the training data item illustrated in Fig. 9A for training a neural network.

Fig. 10 shows a flowchart of a computer-implemented method 200 training a machine learning model for determining a power loss of a moving vehicle based on training data.

Fig. 11 shows a flowchart of a computer-implemented method 300 for determining a power loss of a moving vehicle.

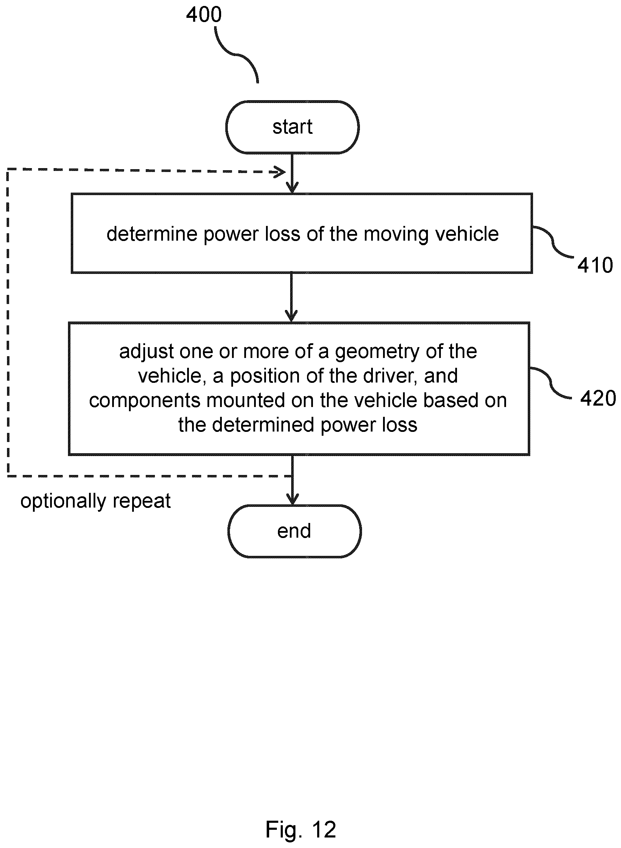

Fig. 12 shows a flowchart of a method 400 for reducing the power-loss of a moving vehicle.

Fig. 13A shows an R2 plot of simulated vs. predicted values of aerodynamic drag in m$^2$ *(CdA)* where predicted values are determined based on a conventional solution using the energy conservation principle.

Fig. 13B shows an R2 plot of simulated vs. predicted values of aerodynamic drag in m$^2$ *(CdA).*

Fig. 13C shows an R2 plot of simulated vs. predicted values of the rolling resistance in p. u. *(Crr).*

Fig. 13D shows an R2 plot of simulated vs. predicted values of drivetrain losses in p. u. (*CdI).*

Fig. 13E shows an R2 plot of simulated vs. predicted values of effective wind speed in m/s *(vw).*

Fig. 14A shows an R2 plot of simulated vs. predicted values of aerodynamic drag in m$^2$ *(CdA)* where predicted values are determined based on a conventional solution using the energy conservation principle.

Fig. 14B shows an R2 plot of simulated vs. predicted values of aerodynamic drag in m$^2$ (*CdA).*

Fig. 14C shows an R2 plot of simulated vs. predicted values of the rolling resistance in p. u. *(Crr).*

Fig. 14D shows an R2 plot of simulated vs. predicted values of drivetrain losses in p. u. (*Cdl*).

## DETAILED DESCRIPTION

The present disclosure relates to methods and systems for determining and measuring inefficiencies that hinder or slowdown a moving vehicle.

A vehicle is preferably a vehicle with two wheels, i.e. a "two-wheeler". However, the principles and methods provided herein can be applied in the context of vehicles with more than two wheels as well.

A vehicle as described here is driven by a driver who delivers a given amount of power to propel the vehicle in the direction of travel and possibly to accelerate the vehicle. It is generally conceivable that part of the power used for propulsion is not caused by the person itself, but for example by a drive of the vehicle, for example an electric motor and drivetrain. Thus, different factors can contribute to the propulsion of the vehicle with an overall power P that can vary over time.

In the real world, not all the propulsion power P but only a portion of the Power P is usable for the propulsion and acceleration of the vehicle. The remainder of the input power P is lost due to different factors. The factors of this power loss are described below and this disclosure describes how the most significant factors that contribute to the power loss can be determined and differentiated from each other.

There are several factors that contribute to inefficiency in the movement of a vehicle, which are in the combination referred to herein as "power loss".

The first major factor contributing to power loss is wind resistance and aerodynamics of the moving system, which is the vehicle, including the driver. In mathematical terms, the factor which expresses this aspect of the power loss is the drag force coefficient *CdA*. For example, the drag force coefficient *CdA* can be modeled and approximated as a function of the vehicle speed v, airflow speed and yaw angle of the airflow, i.e. *CdA = f(v, yaw_angle)*. The *CdA* value of a cyclist can range from 0.1 to 0.8 m$^2$. The *CdA* value can be reduced by more than 0.02 m$^2$ at 15° depending on the shape and the side flow due to the lift effect, as shown for example by Nathan Barrya et. al. (20212): *"Effect of crosswinds and wheel selection on the aerodynamic behavior of a cyclist"*. In Aerotune's database, the highest *CdA* values were measured in mountain bikes with 0.6 m$^2$ and the lowest with 0.15 m$^2$. In addition, the *CdA* value is the product of the aerodynamic coefficient Cd (which is itself dimensionless) and the frontal area A. Without determining the frontal area, it is not possible to separate the Cd and A values.

A second major factor contributing to the power loss is the rolling resistance. In mathematical terms, the rolling resistance is expressed by the rolling resistance coefficient *Crr*. For example, the rolling or road resistance can be modeled and approximated as a function of the air or surface temperature, and road surface properties, i.e. *Crr = f(T, surface)*. The *Crr* value can be between 0.002 and 0.05 and is dimensionless. The lowest values are achieved by tubeless tires in the road bike / time trial range and the highest on fat bikes. Thus, the platform https://www.bicyclerollingresistance.com/ values between 0.0021 and 0.01775. It should be noted that these are rolling resistances in a test rig and the influence of the surface in practice can also have a significant impact, for example, if it is driven in mud or snow (*Crr > 0.05*). In addition, temperature has an influence on rolling resistance, as shown by the Institute for Internal Combustion Engines and Automotive Engineering in Determination and Modeling of Influences on Tire Rolling Resistance. Thus, rolling resistance decreases with increasing environment temperature.

The third major factor contributing to the power loss is an inefficiency in the drivetrain of the vehicle, which is referred to as efficiency coefficient *Cdl*. Examples of such factors are a torsion of the frame of the vehicle and friction of the bearings, the chain, and the rear derailleur. These aspect are typically mostly constant for specific vehicle. The coefficient *Cdl* expresses the lower loss due to these factors, for example as a percentage. *Cdl* values in typical use are in the range of 0.02 to 0.1 and are dimensionless. There are hardly any scientific studies on the orders of magnitude in which the cdl value is located. The company *CeramicSpeed* has conducted a study in which they have examined your new drive. There it could be determined that the drive losses are dependent on the performance and in well maintained systems the value is between 5% and 2%. With dirty drive systems it can also be more than 10%.

While other factors contribute to the power loss as well, it is assumed that the aforementioned three factors are the most relevant factors contributing to the power loss of the vehicles and moving systems under consideration herein and determining those three factors allows for all practical purposes to optimize the movement of the concerned vehicle or system as will be described herein.

Hence is an objective of the technology disclosed herein, to determine parameters that impact the power loss with high precision. In this disclosure, the aforementioned three parameters are used for illustration, since these are typically most relevant for the power loss of target vehicles discussed herein, i.e. two-wheelers.

Unfortunately, these three factors contributing to the power loss cannot be easily determined or measured directly on a moving vehicle. These are thus usually determined indirectly, i.e. by measuring other physical parameters and factors of the moving system and determining the power loss based on a mathematical model. However, even this is a complex if not impossible task as will be described in the following.

However, the technology disclosed herein is more general, and other related parameters that contribute to the power loss may be determined with high accuracy as discussed hereinbelow in addition or instead of the three factors mentioned. For example, for an ordinary car, camper, or motorhome, the total weight can significantly contribute to the power loss and it is difficult to determine when the vehicle is moving or a professional car scale is not available

The physics of a moving system can be modeled using a mathematical model, formula or equations, such as Newton's equation of motion. For a concrete moving vehicle, various parameters in such an equation can be determined more or less accurately through measurement, e.g. the inclination, the current speed, the tyre pressure, the energy applied in accelerating the vehicle, etc. However, some factors cannot be measured precisely, especially when the vehicle moves in the field (as opposed to movement in laboratory), since the measurement instruments are missing, since measurements cannot be conducted precisely, or simply because factors not explicitly modelled in the formula contribute to the actual behaviour of the moving system so that the model is necessarily inaccurate.

Since a large number of parameters contributes to the model, solving the model may inherently be a indeterminate process in that there could be several solutions for unknown parameters of the model, which should be determined by a solver. For example, an increase of the overall power loss by a certain amount may have its cause, e.g., in increased wind resistance or increased power loss in the drivetrain. The individual contributions of the different factors causing power loss, may it be overall power loss or addition power loss, is difficult to attribute to the individual causes for power loss, the most prominent are wind resistance indicated by *CdA,* loss in the drivetrain indicated by *Cdl,* and road resistance, indicated by *Crr.*

It is thus an objective of the present disclosure to provide a method and system that permits, based on real-world input data, which is possibly collected from sensors and databases in real-time and which can be incomplete and afflicted with measurement inaccuracy and uncertainty, to provide an accurate estimate of the overall power loss and its individual factors contributing most significantly to the power loss, represented by the parameters *CdA, Cdl,* and *Crr.*

The present disclosure addresses this problem using a trained machine learning system which is designed to determine output values of parameters that contribute to the power loss, e.g. the three parameters discussed hereinabove. These parameters are calculated by the ML model with high accuracy. One innovative aspect of the disclosure is the nature and high quality of training data used to train the ML-model to achieve this task. Therefore, the process of generating training data is described herein in detail.

The ML model is trained to perform this task. An important aspect of the technology described herein is the manner in which the training data sets are generated and provided. A further important aspect is the format of the training data, the choice and architecture of the ML model. A further aspect is the training itself, including the training methodology and the loss functions applied. Furthermore, once the model is trained, it can be applied to optimize, i.e., to reduce the power loss, e.g., by adjusting the aerodynamics of the moving system, e.g., the position of the driver. These and other aspects of the disclosed technology are described in more detail hereinbelow.

## I. Overview

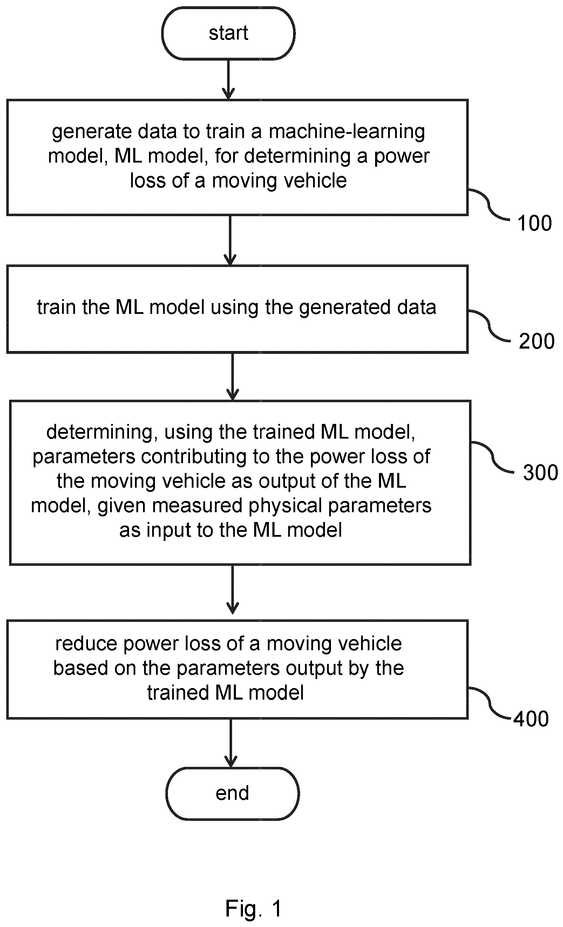

Fig. 1 shows an overview of the principles of creating the computer-based tools to determine the rolling resistance and to apply those tools on a real vehicle to optimize inefficiencies and improve the rolling resistance. The technology disclosed herein is suitable to determine with high accuracy information about the rolling resistance of a moving vehicle.

The technology is based on machine learning.

Method 100 is directed to generating data to train the machine-learning model, ML-model, for determining a power loss of a moving vehicle.

Method 200 is directed to performing the training a particular ML model.

Method 300 is directed to determining, using the trained ML model, with high accuracy parameters contributing to the power loss of the moving vehicle as output of the ML-model, provided measured physical parameters as input to the ML model.

Method 400 is directed to reducing power loss of a moving vehicle based on the parameters output by the trained ML-model.

## II. Aspects of machine learning and selecting an architecture of the ML-model

The process of machine learning is commonly arranged in a pipeline comprising the steps of data preprocessing, feature extraction and selection, and performing one or more machine learning algorithms. To deploy a complete machine learning pipeline, one or more machine learning models and their hyperparameters must be selected. Furthermore, parameters of the machine learning models may have to be adjusted through training the model. A deployment of a machine learning pipeline results that can be used to perform a specific machine learning task.

Selection of the machine learning pipeline, including specific machine learning models may be done in automated manner, for example using the AutoML method. AutoML selects for example one or more machine learning algorithms, their parameter settings, and the pre-processing methods suitable to detect complex patterns in input data of the machine learning task.

Machine learning techniques include the use of neural networks to perform a neural network task. A system receives training data corresponding to a neural network task. A neural network task is a machine learning task that can be performed by a neural network. The neural network can be configured to receive any type of data input to generate output for performing a neural network task. As examples, the output can be any kind of score, classification, or regression output based on the input. Correspondingly, the neural network task can be a scoring, classification, and/or regression task for predicting some output given some input.

### III. System architecture overview

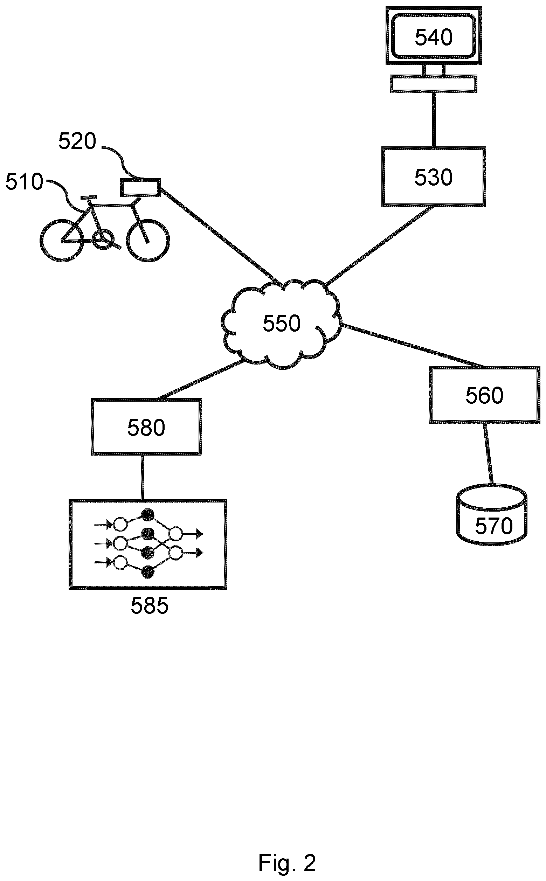

Fig. 2 shows an example architecture of a system for generating training data, training, and determining a power loss of a moving vehicle base on a trained ML model. 510 shows an example of a vehicle, including a mobile computer 520 connected to sensors mounted on the vehicle, such an odometer, a power meter, and pitot tube.

The mobile computer 520 can be a bike computer and can optionally have a display. The computer 520 can be connect via network 550; for example, a wireless network, to exchange data with other computers 580, 560, and 530. The role of the mobile computer 520 can be twofold as described in the following.

First, the computer can be used to collect sensor data usable for establishing and improving models that generate and provide input for the simulation of the physics of the moving vehicle. An example of such model is the track model. Data related to the track model include, for example, a time series of measurements related to the moving vehicle including distance from a starting point and velocity of the moving vehicle for each point in time of the time series, as well as current and environmental data, such as the geo-position of the vehicle road inclination, weather conditions, etc. This data is optionally communicated to a computer 560 to be stored in a database 570. Computer 560 is optionally used to compute statistics across these measurement data. These data sets are used to drive one or more generative models that provide inputs to the physics simulation, which results then in the training data for the ML model. The training procedure of the machine learning model is described according to method 200. Training is carried out by computer 580. The data sets resulting from the generative models and subsequent simulation of the physics of the moving vehicle can be communicated directly to the training procedure or may optionally be stored in database 570 to be retrieved subsequently for training the ML model according to method 200.

Second, once a trained machine learning model or predicting the power loss of a vehicle is trained and available, the computer 520 is used to evaluate the model with input data, thus providing an estimated power loss value and parameters $CdA, Cdl,$ and $Crr$ that contribute to the power loss, to the driver of the vehicle 510 in real-time according to the method 300. The trained machine learning model 585 can be stored in the bike computer or may be stored and evaluated in a computer 580 that is in communication with the computer on the moving vehicle to perform evaluating the trained machine learning model with concrete parameters measured on real-time on the moving vehicle, and communicating back one or more of an estimated power loss value and individual parameters $CdA, Cdl,$ and $Crr$. contributing to the power loss.

The system may further comprise a computer 530 and terminal 540 for performing the physics simulation and for generating training data. Terminal 540 is used to control the simulation.

Finally, the system comprises a computer 580 that performs the actual training and that stores the neural network 585, which implements the ML model. Training data can be obtained directly from the simulation on computer 530 or can be obtained from database 570, connected to computer 560.

The computers 530, 560, and 580 can be the same computer or may be different computers, possibly distributed in a cloud, or clusters of physical computers. These computers are communicatively connected through a network 550.

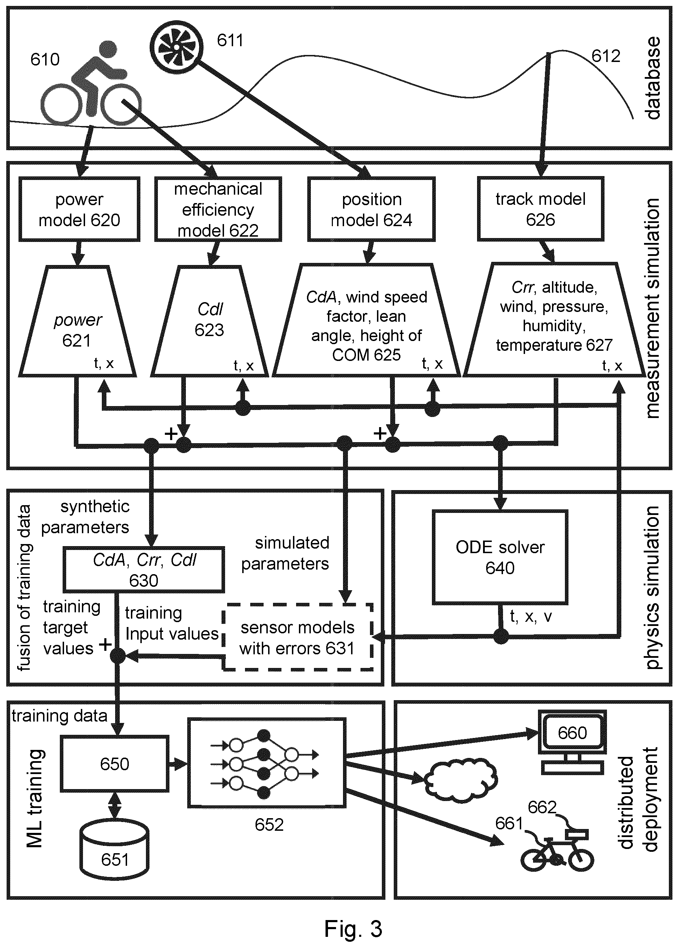

Fig. 3 shows an example architecture of the process and for generating training data, training, and determining a power loss of a moving vehicle base on a trained ML model including architectural components and modules involved.

The basis and starting point for the generation of the training data for the ML model is data obtained by measurement in the field 610, or in a laboratory or wind tunnel 611, or from external databases on geography, topology, historical weather data, and training data recorded during previous training runs of moving vehicles and their drivers 612. This aspect is symbolised in Fig. 3 by a moving vehicle with driver, a wind tunnel, and topology. This data is usually stored in databases.

The actual data sets used as input for the physical simulation 640 originate from generative models 620, 622, 624, 626, which may rely on the aforementioned different data sources 610, 611, 612 for data generation and follow generally valid and known physical principles and models. It would be conceivable that the inputs to the physical simulation 640 come directly from said original sources 610, 611, 612. However, the original data typically only covers partial areas of the data space, measurement data may be incomplete and subject to errors, or may not be available in sufficient quantity. It is therefore appropriate to generate the immediate inputs to the physical simulation 640 in a structured manner using generative models, ensuring that the full range of possible data can be well covered.

The use of generative models instead of the direct use of measured data should be explained and motivated by the following example: Assume that real measured data is available only from a single person with a certain body weight and a certain body height. Only this specific information on body height and body weight could be used as input for the physical simulation. When using a generative model, further values from generally known correlations between body height, body weight, gender, etc. can be provided as inputs for the physical simulation 640. This ensures that the training data, which results from the method described hereinbelow, covers the widest possible range of scenarios of drivers, driving positions, physical parameters of the vehicle, route models, etc., which are, as it were, more or less real, but not necessarily identical to data and scenarios that did or could even occur in the field.

The input parameters of the physical simulation 640 are generated using generative models indicated in Fig. 3 as reference items 620, 622, 624, and 626 related to the aspects of power 620 which expresses the force applied to accelerate the vehicle, a model of mechanical efficiency 622 which models a resistance due to friction and inefficiencies in the drivetrain, a model 624 of the position of the driver of the vehicle at different wind situations, and a model 626 related to the track and environment in which the vehicle is moving.

An initial set of values at the start of the measurement simulation is provided by each model and subsequently, each generator 621, 623, 625, and 627 provides a stream of values and physical input parameters, partly based on information about the current time $t$, which can for example be the duration or the number of time steps $\Delta t$ passed since the start $t_0$ of the simulation, and total distance x covered by the vehicle since the start $t_0$, t and x being determined by the physics simulation 640 as a result of a simulated time interval of length $\Delta t$. This is indicated as an arrow from the physics simulation 640 back to the individual measurement generators 621, 623, 625, and 627. The latter modules update the parameter values output by the measurement simulation along the timeline as the physics simulation is stepwise progressing along the simulated time dimension.

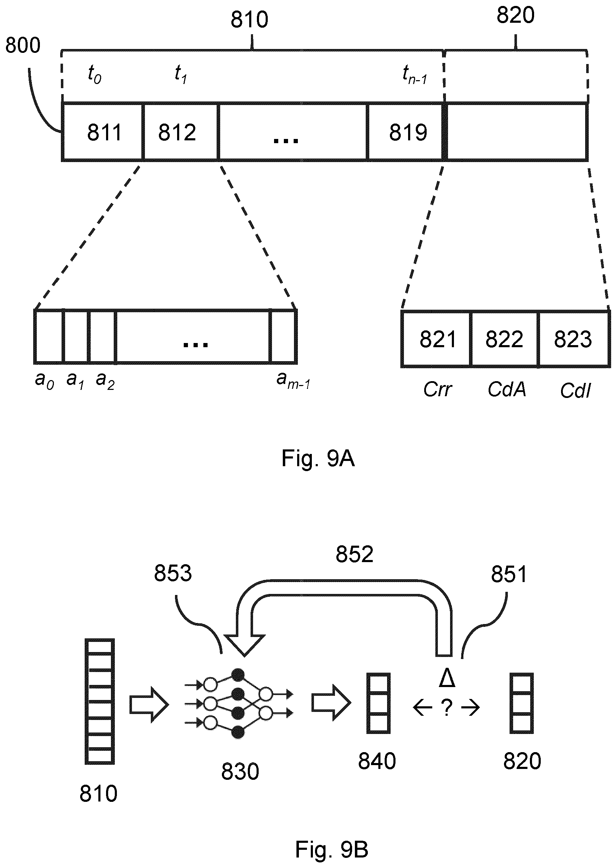

The number $n$ of simulated intervals of length $\Delta t$ and the total duration of the simulated time period $n \times \Delta t$ corresponds to the structure of a training data item, e.g. the number of attribute sets, one attribute set for each simulated point in time, stored in a training data item. The sets of attribute values for $n$ simulated time intervals are also referred to as time series of values. The structure of the training data item has correspondence to the architecture of the neural network 652 implementing the ML model being subject to training using generated training data items. In particular, the number of input variables of the neural network correspond to the number of attribute sets and the number of attribute values in each set included in the training data item. The structure of an exemplary training data item and its use for training are discussed in detail with reference to Fig. 9A and 9B.

The measurement simulation may be used as initial input parameters that remain mostly constant during the measurement simulation along the time dimension, such as the weight of the moving system. Further initial input of the measurement simulation relates to initial values of parameters, such as the initial speed $v_0$ of the vehicle and, the initial position of the vehicle, and the initial power value, etc. which are inputs to the respective models of the measurement simulation, and which are updated as the measurement simulation progresses along the time dimension. The models 620, 622, 624, 626 can be regarded as generators for time series of respective parameters provided by each model as input to the physics simulation. The models for the measurement simulation could be simple number generators, which provide streams of parameters values along the time dimension solely based on initial values of each parameter and possibly some randomness.

The measurement simulation is implemented using different generators. Examples of such generators and their underlying models are described in the following. The power model 620 and 621 basically relate to modelling and providing input parameters of the physics simulation 640 that indicate the power input of the physical system that is simulated. The other models, relating to mechanical efficiency 622, 623, the position model 624, 625 and the track model 626 and 627, relate to modelling and providing input parameters of the physics simulation 640 that contribute to the overall power loss that reduces the total input power specified using the power model, to the actual power that is usable to accelerate the vehicle in its moving direction. The latter three models thus specify various resistances that contribute to the power loss, e.g., resistances through wind, gravity, friction, that hinder that the entire energy of the input power, indicated by the power model 620, be usable for accelerating the system 610 including the vehicle and its driver. The parameters relating to the mechanical efficiency *Cdl* 622, the position of the driver 624, and the track 626, are largely independent and thus implemented as separate models.

The intent of the "measurement simulation" to systematically generate input data for the physics simulation to cover a large breadth of possible scenarios. Due to the large number of parameters and the resulting high dimensionality of the parameter space, it would be very difficult to only rely on data that is collected in the field. Furthermore, and this aspect is probably even more important than the difficulty to cover the large parameters space with measurement data obtained from real experiment is: It is not practical and probably impossible to measure the values of the efficiency coefficient *Cdl*, the rolling resistance coefficient *Crr*, and the drag force coefficient *CdA* in the field, since an elaborate laboratory setup is required to determine them with sufficient precision individually.

Therefore, the parameters *Cdl, CdA*, and *Crr*, are predetermined and chosen to cover all or at least a large possible range of combinations. Therefore, the generation of values for these parameters as input for the physics simulation can be regarded as "synthetic" in the sense that they are chosen from a range of reasonable values that can be observed in practice or in a laboratory setup. These chosen "synthetic" values are then taken into account by the different generative models 620, 622, 624, and 626 for a "simulation" of further input parameters of the physics simulation based on generative models described in the following. These parameters are, in conventional techniques of collecting training data, obtained through measurement, e.g., in a laboratory. In the method disclosed herein, the input parameters of the physics simulation are however provided through a model-based approach, such that they are consistent and in a reasonable relation to the parameter Cdl, CdA, and Crr, mentioned before.

The parameters *Cdl, CdA,* and *Crr* that are input to the physics simulation are referred to a "synthetic" data, since they are systematically generated and provided from a particular parameter range reflecting reasonable values encountered in practice. In other words, synthetic data is information that has been generated artificially rather than generated or derived from real events.

Further parameters that are input to the physics simulation, besides *Cdl, CdA,* and *Crr,* result from the measurement simulation described in the following.

For all generative models 620, 622, 624, 626 that are involved in the measurement simulation, the values of parameter generated by the measurement simulation are not intended to reflect and provide, as input to the physics simulation 640, a precise measurement of any particular real scenario that actually occurred in the field but merely to provide a combination of values that could reasonably occur. While this disclosure specifies four separate models to generate model parameters for different aspects of the physical system, i.e. a simulation of motion of the vehicle, implementations may use fewer or more models and also different parameters generated, as long as complete set of input parameters can be provided to the physics simulation.

The power model 620 can be based on real measurement of power values observed in the field. Power values observed in the field can be collected during a trip using a real vehicle moving on a physical track with a human driver. The power model can be based on a plurality of measurements observed for different vehicles, different tracks and different drivers. The observed power values can be recorded on a computer mounted on the vehicle and from there transferred into a database. The power data can be recorded and stored in combination with other data that is collected in real-time when the vehicle moves on a track, such as the position on the track, which allows, e.g., to fuse power data with track data. Module 621 is the power model which is simulated for a time interval $t + \Delta t$ with a mean value between 0 and 1000 Watt and a standard deviation of 10 to 200 Watt. This corresponds to the random power delivered by a cyclist. The values are limited downwards to 0 Watt and thus correspond to the randomly delivered power of a cyclist, and uses as inputs parameters like the current time $t$ covered by the vehicle during a trip and provides as output an estimated and reasonable power value during a time interval following time t, which is $t + \Delta t$. Note that the frequency at which the power value is sampled during a recording in the field or at which the power model 620 provides simulated power values may be different from the frequency, and accordingly the time step $\Delta t$, used or the physics simulation, however module 621 is designed to compensate for any difference in frequency using averaging or interpolation.

The so-called mechanical efficiency model 622 relates to providing values for efficiency *Cdl,* which expresses the efficiency with which power supplied to the vehicle's drivetrain is converted into power to accelerate the vehicle. The value of *Cdl* can be measured in a laboratory and is dependent on the transmitted power itself, which includes a driver and the vehicle itself. For example, a relatively low value of *Cdl* may express that some of the power supplied to the drivetrain is lost due to friction in the drivetrain, torsion of components, etc., and thus is not available for acceleration of the vehicle. Module 623 provides as output an estimated and reasonable *Cdl* value during a time interval after time t, i.e., $t + \Delta t$.

The so-called position model 624 provides values for the drag coefficient *CdA* and other values related to and dependent on the wind resistance of the moving system including the vehicle and the driver, such as the position of the driver's arms and body and the shape of equipment such as the driver's helmet and clothing. The concerned parameters provided by this measurement simulation are *CdA,* wind speed factor, center of mass (COM) height, and inclination angle. The wind speed factor gives the deviation between the actual wind speed and the wind speed measured by the Pitot tube, where the measurement is biased due to the geometry of the vehicle and/or the body position of the driver. The lean angle is particularly relevant for scenarios involving moving two wheelers in a velodrome, since the measured velocity of the wheels in this case does not represent the velocity of the center of mass (COM). The height of the center of mass and the lean angle can be used to determine the velocity of the center of mass. The generative models take into account such correlations, which can be described mathematically.

Value combinations of these parameters that are feasible and encountered in practice can be measured on a given moving system 610 including vehicle and driver and be determined in a laboratory such as a wind channel 611. The model 624 can be calibrated and initialized with values determined by experimental setup. The intent of the model is to provide parameter combinations that could be encountered in practice and that have reasonable relations as they could be observed and measured by experiment in the wind tunnel. For example, a more upright position of the driver will lead to a larger surface area of the frontal area of the moving system exposed to the airflow, i.e. the wind from the front, and thus a higher drag force coefficient *CdA.* In other words, the *CdA* expresses how much the airflow affects and reduces the power actually available and put to use for forward acceleration of the vehicle. The *CdA* depends, e.g., on the size and shape of the surface texture, including the size and position of the drive. Module 625 provides as output a reasonable combination of values of these parameters during a time interval following time *t,* which is *t + ∆t.* Note that a value of *CdA* would be difficult to determine precisely in the field and even in a wind channel laboratory. As indicated earlier, the measurement simulation using models 624 and 625 is intended to provide parameter combinations as input to the physics simulation 640 that are reasonable and feasible and that that could reasonably occur in the field but not necessarily a precise measurement of any particular real scenario that actually occurred in the field.

A further model 626 and 627 relates to the track and more generally to the environment and weather conditions under which the system 610 is moving. Parameters provided by this model include the rolling resistance coefficient *Crr,* the altitude, wind pressure, humidity, and the environment temperature. Module 625 provides as output a reasonable combination of values of these parameters during a time interval following time *t,* which is *t + ∆t.* The track model can be based on real track end historical environment data, e.g. collected from geo-information-system and weather databases.

Data provided by the power model, the mechanical efficiency model 622, the position model 624, and the track model 626 is provided as input to the physics simulation to obtain as output the acceleration, the speed and the distance coved during a subsequent time interval of duration ∆t. Information resulting from the physics simulation 640 about the time *t,* the way x covered and the speed *v* of moving vehicle are fed back into the modulus 621, 623, 625, and 627 providing the simulated measurement data in the next time interval.

Besides the feedback, the information resulting from the physics simulation is forwarded, included in the input parameters of the physics simulation, to form the training data set, including training data items, that are used for training 650 the machine learning model 652 for predicting the power loss of a moving vehicle. Optionally, the training data items are stored in a database 651.

Each training data item includes information about a time series of sets of attribute values valid at time *t* during the physics simulation. The time series typically spans a time window between 10 s and 2 minutes, typically 15 seconds for the *CdA* value, 1 minute for the *Crr* and *Cdl* values. During this time window, the parameters *CdA, Crr, Cdl can be assumed to be mostly constant when generating synthetic training data.* The time step ∆t can be in the order of seconds, hundreds or tens of milliseconds. Attributes comprise parameter values provided as input to the physics simulation, called *"simulated parameters"* in Fig. 3, and the output of the physics simulation, *t, x, v.* The parameters include the slope angle of the track on which the vehicle is moving, the weight of the vehicle (which does likely not change over time) including its driver, power applied to propel the vehicle, air temperature and pressure in the environment in which the vehicle is moving, air density, wind speed, wind angle, vehicle speed *v,* way distance of the vehicle since the start of the simulation, as well as values for *CdA, Crr, Cdl.*

Parameter values that remain constant or mostly constant during the simulated time interval can be included once in the training data item and need not be duplicated in each set of attributes along the time series.

A training data item results from the fusion of synthetic parameters *CdA, Crr, Cdl* 630 with the time series of values obtained from the measurement models and the results of the physics simulation 640 along the stepwise simulation of an overall time interval in steps ∆t. Thereby, the values *CdA, Crr, Cdl* are used as target attributes in the training of the neural network and the time series of values are input parameters in the training of the training of the neural network. Depending on the measurement simulation and the model underlying the generation of values for *CdA, Crr, Cdl,* the values can be constant during the overall duration of the simulation period reflected by the training data item, so that these constant values constitute the target attribute values. If the values of *CdA, Crr, Cdl* vary slightly during the simulation period, then aggregated values, such as an average value across the overall simulated time, may be used as a target attribute for the training.

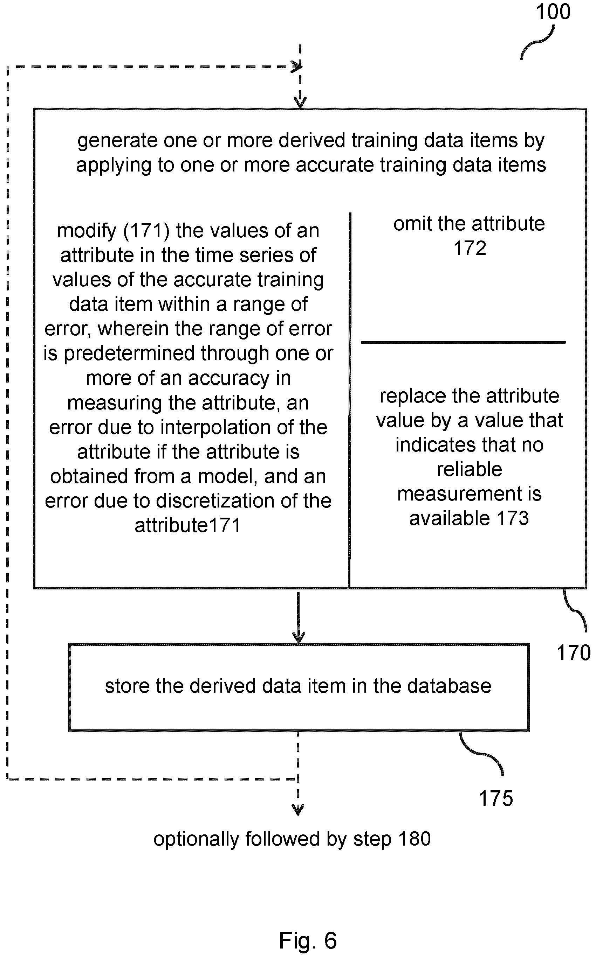

Fig. 3 indicates further in item 631 and optionally, data included in a training data item may intentionally be changed or cancelled to simulate sensor errors. Such procedure will be described in more detail in the context of Fig. 6.

Fig. 3 indicates the computer on which the training is performed as 650 and may store the parameters of the neural network model 652 during and after training in a database or other memory indicated 651 in the Fig. 3.

After training, the trained neural network model may be deployed in different scenarios. In one example, the neural network model can be used by an individual user on a computer 660 for estimating values of power loss factors *CdA, Crr, Cdl* based on track data recorded in the field by a bike computer of this user, so that the user can reflect and assess and analyse inefficiencies and sources of power loss in hindsight. In another example, the neural network model can be deployed on a bike computer 661 so that precise estimations of power loss factors *CdA, Crr, Cdl* can be obtained from sensor data measure and obtained in real-time while the user is riding the vehicle 661 or shortly thereafter.

The time series of values of physical attributes included in a training data item have so far been described as input parameters of the simulation 640 of the motion of the vehicle, i.e. the physics simulation. In addition, attributes recorded in a training data item may include further values that are not considered in the simulation of motion and the underlying physics model but that could have been recorded in real scenarios or generated by measurement models, e.g. the position model 624 described above. Such additional attributes may well make a difference in the determining of the proportions at which0each of the three factors *CdA, Crr,* and *Cdl* contribute to the overall power loss. Examples of additional parameters are a center of mass (COM) of the moving vehicle, which can vary when the vehicle is moving in velodrome due to the variation in the lean angle depending on whether the vehicle is moving in a straight line or in a curve. Further aspects and parameters that may be included in a training data item relate to x,y,z-acceleration of the vehicle, x,y,z-rotation of the vehicle determined by a gyroscope, and x,y,z-magnetic flux in the earth magnetic field determined by a magnetometer. Even though the physics and modelling of these aspects would be complex or at present impossible, the ML system will naturally "learn" during training, in how far such additional parameters are indicative for the distribution of the power loss, even if those effects are not considered in the abstraction made in the physics model.

## IV. Other application scenarios

The scenarios for which power loss and factors contributing to the power loss were described so far focussed on a two-wheeler and the factors *CdA, Crr,* andCdl, Clearly *CdA* is typically the dominant factor of power loss and the methodology described so far is intended to determine this factor in particular with high accuracy in the absence of means and instruments to carry out precise measurements in the field. A solution is described that determines the *CdA, Crr,* and *Cdl* indirectly based on other physical attributes of the moving vehicle or system and based on an ML model trained with specific training data and trained in a specific manner as described herein. A particular challenge for two-wheelers like bikes or motorbikes is that the *CdA* value varies of over time, since it is dependent on the position of the driver, which typically changes over time.

The principles of determining physical parameters of a moving system, with the concerned physical parameters being difficult to measure precisely in a practical scenario, are however also applicable to other applications and values other than *CdA*. Such other application or scenario in which the techniques described herein can be used is described as follows.

The weight of a car, a passenger car, a truck, or a motor home is typically difficult to determine if an appropriate scale or weighing device is not available. The weight of such an individual vehicle can vary significantly and depends, for example, on the payload and fuelling of the vehicle. Yet the system weight is an important parameter that drivers need to be aware of for reasons of safety and due to legal requirements, which could be different in different countries. For a car, a passenger car, a truck, or a motor home, the value of *CdA is typically more or less constant for a specific car but varies among different car* models. Furthermore, in this scenario, the values for the power acting on the acceleration of the vehicle as well as the roll resistance can be determined based on engine characteristics and based on previous laboratory experiments with different tire pressures, vehicle weights, etc.

Thus, in this scenario, it makes sense to add, in addition to parameters *CdA, Crr,* and *Cdl,* the system weight as the target variable for the ML model, i.e. to turn the system weight from an input parameter to an output parameter of the ML model. An ML model configured in this manner and trained using physics parameters of a car, a passenger car, a truck, or a motor home, and a with training data generated according to the principles described herein, can be deployed to accurately predict, in addition to the power loss, the weight of the moving vehicle, i.e., car, a passenger car, a truck, or a motor home, in real-time while driving and without use of a scale.

It is apparent from this example that the skilled person can generalize the herein described technology and procedure for generating training data, training an ML model, and deploying the ML model in a respective scenario of a moving vehicle, beyond the described examples, in a manner so that different physical parameters are applied, respectively, as inputs or target values of the ML-based solution.

In the below section that describes experimental data, one of the cases and scenarios that were tested includes a neural network which includes as additional output parameter, besides *CdA, Crr,* and *Cdl,* the wind speed *(vw)*. It is clear that the training data items, some attributes which have been described hereinabove as input parameters of the neural network model, can be also used and obtained as output of a neural network model, provided that the structure of the neural network and the training procedure are adapted accordingly. For example, this can be advantageous when such a neural network is deployed in a scenario where the wind speed is not available as input parameter (e.g. there is no appropriate sensor or pitot tube installed on the moving vehicle that could provide the wind speed value. Hence, if the wind speed value is nevertheless of interest, it could be obtained from the output of the deployed neural network.

## V. Collecting and generating training data

An ad-hoc approach to collect complete sets of attributes for training data items would be to determine the values of some of the attributes of training data from measurement in the field, and to calculate values of other attributes, i.e. attributes that are less amenable to measurement, using a physics simulation. In combination, the measured and simulated attributes would form a data item used for training a neural network.

There are at least two challenges that make this approach impractical: The first challenge is that the range of possible scenarios to measure is, given the large number of physical parameters, very broad, such that reliance only on measured data sets will unlikely cover a large enough variety of scenarios of training data sets that would be suitable to successfully train a machine learning model. The second challenge is that, for a given set of measured parameters, a physics simulation may have multiple possible solutions for the combination of values of *CdA, Crr,* and *Cdl*, which are the most significant contributors to the power loss. In other words, there is no unique solution as to which of these factors contributes more or less to the overall power loss of the vehicle. The described ad-hoc procedure would thus not result in unambiguous complete data sets of physical parameters.

To solve these concerns and problems, a new method to generate complete sets of physical attributes of a training data item related to the moving vehicle is described in the following.

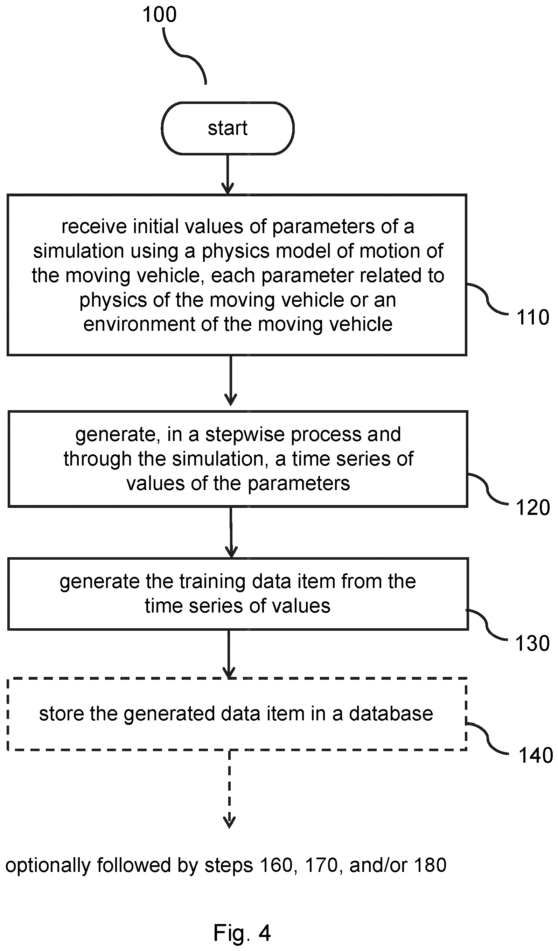

Fig. 4 shows a flowchart of a computer-implemented method 100 for generating data to train a machine-learning model for determining a power loss of a moving vehicle.

The purpose of the method is generating one or more training data items of a training data set to train a machine-learning model for determining a power loss of a moving vehicle. The structure of an individual training data item is described with reference to Fig. 9A.

The method starts with the step 110 of receiving initial values of parameters of a simulation using a physics model of motion of the moving vehicle, each parameter related to physics of the moving vehicle or an environment of the moving vehicle.

In step 120, a time series of values of the parameters is generated in a stepwise process and through the simulation.

The simulation using a physics model of motion of the moving vehicle, also referred to as physics simulation, is e.g. based on Newton's equation of motion as will be described subsequently. The physics simulation determines, starting at time $t=0$ and with an initial velocity $v_0$, at subsequent time steps of distance $\Delta t$, as output an acceleration of the moving vehicle as second derivation of the distance $x$ along the time $t$, and thus also the resulting speed v and total distance x covered by the moving vehicle at the end of each interval. With reference to Fig. 3, this is indicated as the output of the ODE solver 640.

The parameters of the simulation are first and second parameters wherein the simulation uses as input: as the first parameters, predetermined values specifying, for the moving vehicle, a mechanical efficiency coefficient *Cdl,* a rolling resistance coefficient *Crr,* and a drag force coefficient *CdA;* and as the second parameters, values obtained from measurement or from one or more generative models as described hereinabove in the context of measurement simulation.

The initial step is described as "measurement simulation", since it relates to providing parameters used as inputs to the physics simulation, wherein different inputs being provided in the stepwise simulation at different time steps. The term "measurement simulation" suggests that quantities that are typically measured, are generated through simulation based on generative models that can be based on real measured data.

The physics simulation determines at each step of the stepwise process at least a velocity of the moving vehicle at a respective time of the time series and provides as output updated parameters.

In step 130, a training data item is obtained from the time series of values; wherein a training data item comprises input attributes and target attributes, wherein an aggregation along the time series of values of the first parameters of the simulation are the target attributes; and wherein the time series of values of the second parameters of the simulation are input attributes.

Optionally, the generated one or more training data items are stored in step 140 in a database.

In one embodiment, the physics model is based on Newton's equation of motion, which describes an acceleration $\ddot{x}$ of the moving vehicle depending on various influences as a nonlinear differential equation as follows:

$$\ddot{x} = \frac{(P \cdot C_{dl})}{\dot{x} \cdot m} - g \cdot (C_{rr} \cdot \cos(\alpha) - \sin(\alpha)) - \frac{\rho \cdot C_{dA} \cdot (\dot{x} + v_w)^2}{2 \cdot m};$$

This differential equation is solved using numerical analysis and numerical analysis may be based on solving ordinary differential equations.

Ordinary differential equations are solved using a numerical differential equation solver, which is, for example, implemented according to an algorithm of Runge-Kutta or Dormand-Prince.

Input parameters of the physics simulation include one or more of:

- $P$ : power [W],
- $\dot{x}$ : vehicle speed [m/s],
- $v_0$ : initial speed of the moving vehicle [m/s],
- $v_w$ : effective wind speed [m/s in moving direction of the vehicle]
- $m$ : system mass [kg] (vehicle and driver or system),
- $g$ : gravitational acceleration [m/s$^2$],

- $\rho$ : air density in [kg/m$^3$],
- $\alpha$ : inclination angle [rad].

Some initial values of these parameters are provided by the measurement simulations. For example, an initial value for the power P is provided by the power model 620 and adjusted over time $t$ by module 621 as a current, i.e. updated power value, which is fed into the physics simulation in the next time step $t + \Delta t$.

Predetermined, i.e. "synthetic", parameters of the physics model include one or more of:

- $C_{rr}$ (Crr): rolling resistance coefficient [p.u. or %],
- $C_{da}$ (CdA): drag force coefficient [m$^2$],
- $C_{dl}$ (Cdl, eta): mechanical efficiency, drivetrain loss [p.u. or %].

These predetermined parameters are not provided through generative models but are chosen from a range of plausible values and observable in real physical systems in a laboratory or wind tunnel. The coefficients Crr and Cdl are dimensionless, and specify a value per unit (p.u.) or in percent (%). The per-unit values corresponds to the percent values multiplied by 100.

The intent of having some physics parameters Crr, CdA, and Cdl predetermined and (mostly) constant for a simulation run, while having other parameters updated is as follows: Through the simulation under the given, constant, predetermined parameters, residual parameters of the physics model, i.e., parameters other than Crr, CdA and Cdl, are updated along the time according to simulation results and according to the generative models underlying these residual parameters. The complete set of parameters, i.e., the combination of predetermined and the residual parameters at a certain time $t$, reflect an accurate situation of the physics of the moving vehicle. While such particular situation may have never been encountered in practice or measured in the field or may not even be considered as a situation that would ever occur in the field, it is nevertheless a completely accurate set of physics parameters based on the physics model underlying the simulation. For example, a scenario could specify a predetermined very high mechanical efficiency Cdl, which could be caused by a rusted drive chain and wrecked drivetrain overall. Such scenario may nevertheless lead to accurate results in the physics simulation and result in a training data item that is useful for the training of the ML model. However, such scenario may not be reasonably encountered in practice since athletes seeking to improve, for example, their aerodynamics when riding the moving vehicle will very likely not make use of wrecked drivetrain. Such accurate data items provide a perfect "ground truth" for the later training an ML model to compute the three major components Crr, CdA, and Cdl contributing to the power loss as function of physics data presented as input to the trained ML model. Note that in the later deployment of the ML model, Crr, CdA, and Cdl are residual values and other parameters serve as input, whereas the situation in the simulation described herein and used for generating the training data items reflecting accurate physics of the moving vehicle is the inverse: Crr, CdA, and Cdl are predetermined and other parameters are residuals.

A conventional approach of simply using data measured in the field could not provide such accurate ground truth data, since measurement is afflicted with error and precise measurement or estimation of Crr, CdA, and Cdl in the field is, as explained above, very difficult if not impossible.

The list of physics parameters described above are just examples and depending on the type of moving system, some of the listed parameters may be omitted and/or other parameters may be added. For example, for an ordinary car, the tire pressure, the type of tires can be relevant factors for determining the overall power loss.

A training data set may include additional parameters that are not immediately involved as input or output of the physics simulation. The physics simulation is just an approximation or model that can't cover all effects. The additional parameters that are not immediately involved as input or output of the physics simulation that may nevertheless influence the Crr, CdA, and Cdl.

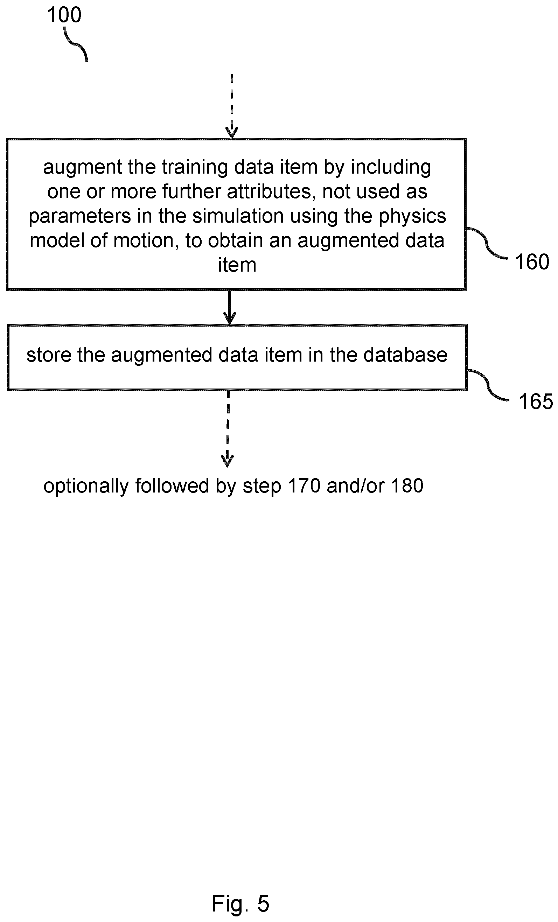

Referring now to Fig. 5, where the method 100 of generating training data may further comprise the step of augmenting 160 the training data item by including one or more further attributes, not used as parameters in the simulation using the physics model of motion to obtain an augmented data item.

These parameters are obtained through observation and/or measurement in the field and are e.g. provided through the measurement simulation described above using the position model 624 and 625, the latter module updating the parameter values from the measurement simulation along the timeline as the physics simulation is progressing. In detail, possible parameter that are augmenting the data sets are:

- $\delta$: lean angle [rad] (optional if the moving vehicle is a two-wheeler),
- one or more parameters relating to a geometry of the moving vehicle including a position of a driver of the moving vehicle,
- dynamic air pressure specified by an amount of air flow velocity and air flow direction measured by a measurement instrument, which preferably is a pitot tube and mounted on the moving vehicle.

Further physical parameters not used in the simulation to obtain augmented data sets, including corresponding related parameters obtained through simulation or observable in real physical systems in a laboratory or wind tunnel, such as:

- *hcom:* height of centre of mass (COM) based on the position of the driver and the lean angle,
- *vwk:* effect of the position of the driver on the dynamic air pressure.

The effect of the position of the driver on the dynamic air pressure is determined through experimentation in a wind tunnel by: (a) varying the geometry of the vehicle or of components mounted on the vehicle and/or the position of the driver, and (b) based on a known effective windspeed, determining a relation between the position of the driver and the dynamic air pressure, resulting in the effect of the position of the driver on the dynamic air pressure. All these aspects are included in the position model 624 that provides the measurement parameters related to the airflow and its impact on the total power loss. Since this impact of the airflow, expressed in the physics model by the *CdA,* is among the three synthetic parameters *Cdl, CdA,* and *Crr* the most significant on the total power loss, its model is designed with care to ensure a coherent and accurate set of output parameter of this part of the measurement simulation.

For example, in a wind tunnel test, the set wind speed, the measured wind speed from a pitot tube and a geometry of the cyclist are measured. The x-distance from the head to the beginning of the pitot tube and the y-distance from the head to the pitot tube were measured. With the help of the measured data, a polynomial regression can be created, which shows the influence on wind speed measurement in the pitot tube. This dependence and correlation of parameters can be included in the position model 624. The position model itself can be based on machine learning to express and implement such correlations for purpose of measurement simulation herein.

The augmented data sets obtained in the aforementioned manner are optionally stored in step 165 in the database. Storing can mean that these data sets are added in addition to the existing data sets, or that data added through the augmentation is incorporated in existing data sets in the database.

So far, the generated data sets provided after the physics simulation are sets of accurate data, in the sense that they perfectly reflect the physical model and its simulation at an accuracy of the numerical simulation. Accordingly, the power loss and its contributing factors are only impacted by the parameters included in the physics model and simulation and that each data set and further factors not considered in the model are absent. This is, of course, not a realistic scenario that is encountered later on, when using the ML model to determined power loss of a moving vehicle in the field. To make the ML model robust and suited to deliver precise results for the output parameters even in the presence of inaccuracies of measured inputs or factors not included in the physics model, derived data sets are generated as described in the following.

For this purpose, sensor models are used that employ both discretization and measurement errors, which are created on the basis of the manufacturer's specifications. In this way, appropriate synthetic data can be created for each measurement environment and to simulate realistic measurement accuracies for the *CdA, Crr,* and *Cdl.*

Referring now to Fig. 6 showing an embodiment of method 100 which further includes the optional step 170 of generating a derived training data item by applying to one or more accurate training data items one or more of the following steps 171, 172, 173:

The value of one or more attributes in the time series of values of the accurate training data item are modified in step 171 within a range of error, wherein the range of error is predetermined through one or more of an accuracy in measuring the attribute, an error due to interpolation of the attribute if the attribute is obtained from a model, and an error due to discretization of the attribute.

The value of an attribute is omitted or replaced by a random value in step 172.

The value of an attribute is replaced in step 173 by a value that indicates that no reliable measurement is available.

The derived data set is optionally stored in step 175 in the database.

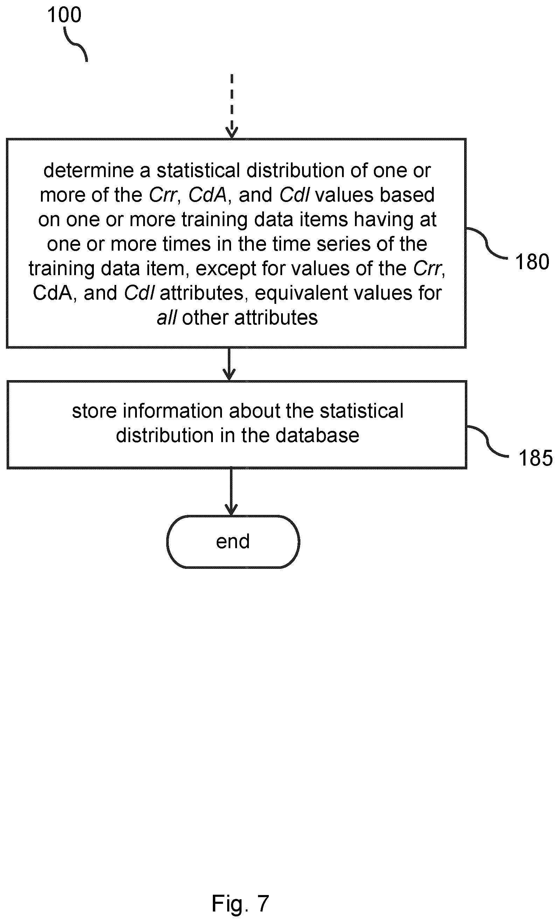

Referring now to Fig. 7, where the method 100 further includes the optional steps of determining 180 a statistical distribution of one or more of the *Crr, CdA,* and *Cdl* values based on one or more training data items having at one or more times in the time series of the training data item, except for values of the *Crr, CdA,* and *Cdl* attributes, equivalent values for all other attributes. In this context, values of a same attribute are equivalent, if the values are equal or differ only by a margin within an accuracy threshold of the attribute.

Optionally, information about the statistical distribution is stored 185 in the database.

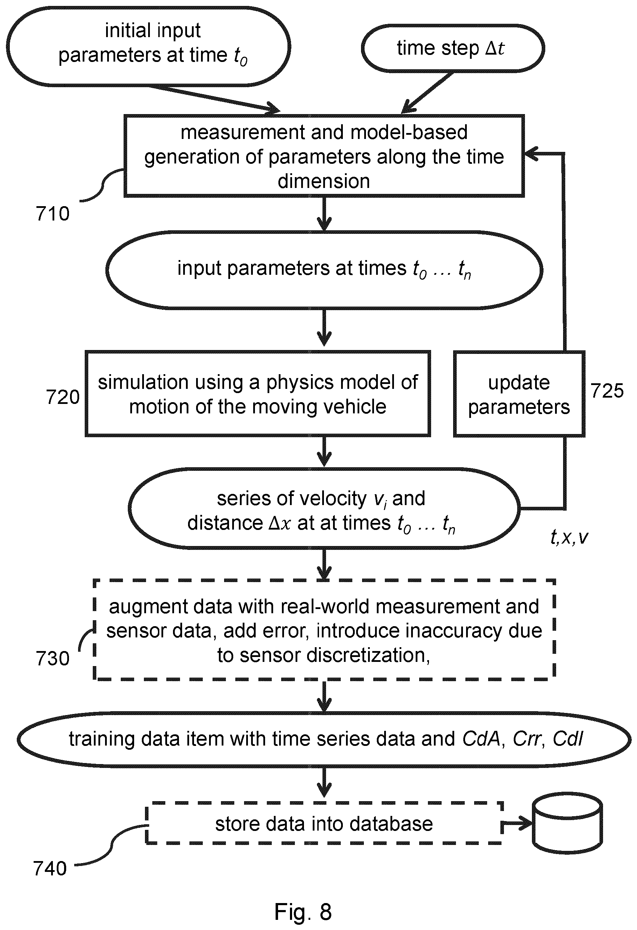

Fig. 8 summarizes the generation of training data for training a machine-learning model for determining a power loss of a moving vehicle as follows: In step 710, input parameters of the physics simulation are obtained through measurement simulation as explained above. The generation of input parameter values through measurement simulation is a stepwise and iterative process along the time dimension $t$. Depending on the model underlying the measurement simulation, the generation of parameter data point along the time dimension can proceed according to time intervals larger or smaller than the time step width $\Delta t$ of the physics simulation. In this case, the measurement simulation includes extrapolating parameter values along the time dimension at steps $\Delta t$.

In step 720 the simulation of the physical model of the moving vehicle is performed for a time step $\Delta t$ resulting in updated values for velocity, distance from the starting point and possibly a new position of the vehicle.

In step 725, physical parameters are updated based on the new velocity using the respective generative model underlying the respective parameters.

In step 730, generated training data items are optionally augmented or modified as explained hereinabove based on real-world measurement and sensor data. In this step, simulated errors due to sensor discretization or measurement inaccuracy can be intentionally introduced into the training data. Furthermore, training data can be augmented with additional attributes that are not considered by the physics simulation.

In step 740 training data items are optionally stored in a database.

Fig. 9A illustrates an example structure and data record of a training data item 800. The structure 800 includes a time sequence 810 of attribute sets 811, 812, and 819, wherein each of the attributes $a_0$, $a_1$, $a_{m-1}$ in a set corresponds to a parameter of the physics simulation and the value of each attribute reflects the value of the corresponding parameter at the steps of the simulation at time $t_0, \ldots t_{n-1}$. The sequence 810 is used as an ensemble as input attributes during the training process. The structure 800 further includes fields 820 to store values of attributes $Crr$ 821, $CdA$ 822, and $Cdl$ 823. These fields are used as an ensemble of target for the training process. Fig. 9A shows an example, a different arrangement of fields is possible, depending on the attributes used and obtained from the physics simulation and further attributes introduced through augmenting training data items as described above.

Fig. 9B illustrates the use of a training data item with structure according to Fig. 9A in the training process of a neural network 830. Input attributes 810 are fed into the neural network as input parameters. As a result, values 840 are obtained as output of the network. The output values 840 are compared to the values of target attributes 820 of the training data item. If a loss function determines an error or deviation 851, then individual weights 853 of the neural network are adjusted using a learning and optimization method.

## VI. Training the ML-model

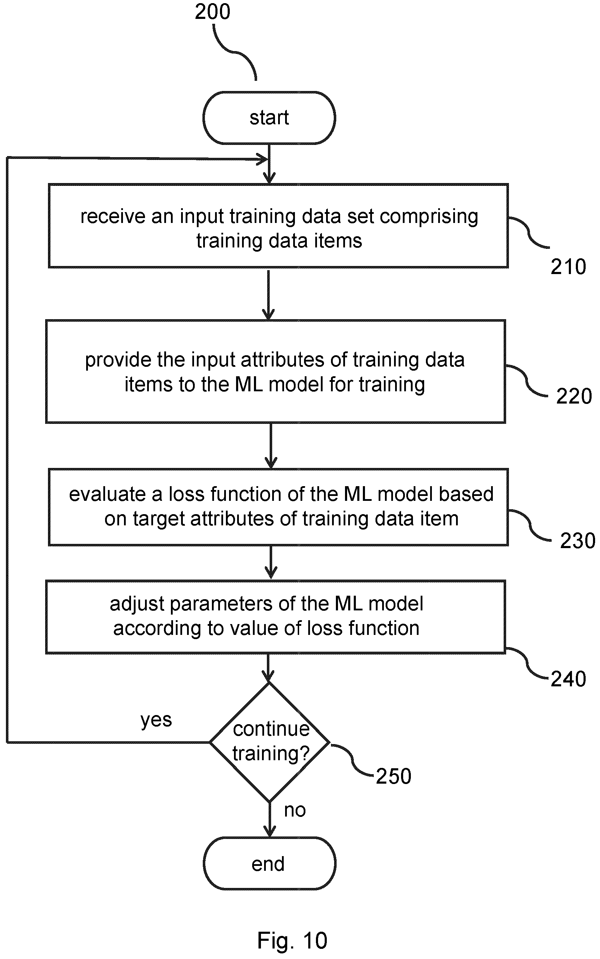

After training data is generated according to method 100 described hereinabove, a neural network can be trained using the training data items in the training data set. The training proceeds according to the principles of supervised learning and following the steps of the method 200 illustrated in Fig. 10.

In step 210, an input training data set is received, comprising a plurality of training data items.

In 220, the values of input attributes of a training data item are repeatedly presented as input to the ML model for training.

In step 230, a loss function of the ML model is evaluated based on target attributes of training data item and the values provided as output be the ML model to be trained.

In step 240, parameters of the ML model are adjusted according to value of loss function.

Depending on the loss function and possible other convergence criteria, e.g. based on test data, it is decided in step 250 if training should continue or not.

Supervised learning follows one of the following principles: parameter fit in combination with linear regression if the machine-learning model is a feed-forward neural network or deep neural network, DNN, or a recurrent neural network, RNN, parameter fit in combination with linear regression; parameter fit in combination with a random forest method; or backpropagation through an Ordinary Differential Equations, ODE, solver where the machine learning model is a Neuronal Ordinary Differential Equations, NODE.

The machine learning models and/or the ensemble of machine learning models may employ any suitable machine learning including one or more of: supervised learning (e.g., using linear regression, Baysian linear regression with and without polynomial features, logistic regression, back propagation in neural networks, or using random forests, decision trees, etc.).

The training data received can be in any form suitable for training a neural network, according to one of a variety of different learning techniques. Learning techniques for training a neural network can include supervised learning. For example, the training data can include multiple training examples that can be received as input by a neural network. The training examples can be labelled with a known output corresponding to output intended to be generated by a neural network appropriately trained to perform a particular neural network task. For example, if the neural network task is to estimate a power loss of a moving vehicle, the training examples can be properties of the vehicle and the environment, current conditions of the vehicle and the environment, a current power level and direction applied to accelerate the vehicle and resulting a rolling resistance coefficient $Crr$, mechanical efficiency value $Cdl$, drag force coefficient $CdA$ determined in a laboratory and/or estimated using a simplified models physical and mathematical models. The resulting $Crr$, $Cdl$, and $CdA$ value and indicative for the absolute power loss to be estimated by the trained machine learning model.

To measure the accuracy of a candidate neural network, the system can use the training set to train the candidate neural network to perform a neural network task. The system can split the training data into a training set and a validation set, for example according to an 80/20 split. For example, the system can apply a supervised learning technique to calculate an error between output generated by the candidate neural network, with a ground-truth label of a training example processed by the network. The system can use any of a variety of loss or error functions appropriate for the type of the task the neural network is being trained for, such as cross-entropy loss for classification tasks, or mean square error for regression tasks, optionally and in the case of physics-informed neural networks with physics-informed loss function. The gradient of the error with respect to the different weights of the candidate neural network can be calculated, for example using the backpropagation algorithm, and the weights for the neural network can be updated. The system can be configured to train the candidate neural network until stopping criteria are met, such as a number of iterations for training, a maximum period of time, convergence, or when a minimum accuracy threshold is met.

For a typical training, a total between 10 to 600 million training data items are used. It can be advantageous to train the machine learning model in consecutive phases by applying different sets of training data in each phase.

For example, in a first phase of the training, it is advantageous to train the ML-model with data including attribute values, possibly randomized, that cover a broad spectrum of a range of possible values for the respective attribute, even if the attribute values or a combination of attributes values are rare or impossibly encountered in practice as described before. Randomization in this context means, for example, that the training data set includes training data items that specify random combinations of $CdA, Crr,$ and $Cdl$ along the full range of values conceivable in practice in each of the three dimensions $CdA, Crr,$ and $Cdl$ and as described herein in the context of the respective generative models. Thereby, the attribute sets included in the same training data item should represent a sequence of values that could occur during a window width of 15 seconds. In the first phase of training, training data items that are subsequently presented to a neural network for the purpose of training may not relate to each other, e.g. a data item may represent an extreme uphill scenario, whereas an immediately subsequent item represents an extreme downhill scenario, which would correspond to a sequence of scenarios that would not occur in immediate sequence in practice. It is preferred that the values of attributes of data items used in the first step of the training are accurate, i.e., they are the values resulting from the simulation of the physics of the moving vehicle, e.g., according to Newton's equation of motion. This enables the model to learn the basic physics of the moving vehicle following Newton's equation of motion.

In a second phase of ML training, it may be advantageous to use training data that is based on and synthesizes real-world measurement data, i.e. data that is based on recordings of measurements and performance that athletes actually encountered during their physical trainings in the real world on a track. Combinations of $CdA, Crr, Cdl$ as well as existing real-world data, i.e., data collected in the field, are used to generate such training data items, that reflect more realistic scenarios than training data items used in the first phase of the training, for the second phase of training the ML model, with the advantage that the $CdA, Crr,$ and $Cdl$ value are accurate, since they predetermined values chosen from a range of plausible values and input parameters for the physics simulation. In contrast to the first phase of training, training data items presented to a neural network in the second phase follow a sequence that represents real measurements on track. This means that data items presented in an immediate sequence to the neural network may not differ too much in certain parameters since they represent a scenario of a continuous drive. In this phase of the learning, the neural network is trained to learn the typical behavior of drivers or rate of change for certain parameters, e.g. the value of $Cdl$ rarely changes, e.g. ii may change typically around 6 times during an hour. In other words, which during the first phase of training, subsequently presented data items were independent of each other, this is not the case any longer in the second phase of training. The neural network that benefits from this second phase of learning is typically a neural network from the class of Long Short-Term Memory (LSTM) networks.

It is not important to know the exact values of the real-world data, but is important that the values that are used cover at least the parameter space and the combinations of parameters that possibly occur in practice. For example, a second neural network can identify further time dependencies in the such synthetic training data that is generated based on real-world measurement data and on predetermined values of $CdA, Crr,$ and $Cdl$. For example, the $Cdl$ value usually does not substantially change during periods of time shorter than 10 minutes, and the roll resistance value usually will not change substantially over a period of 1 to 2 minutes. Thus, compared to the training data used in the first phase of the training, more information is available in the training data used for the second phase of the training, which leads to an improvement in prediction accuracy of the resulting trained ML model.

In further steps of the training of the ML model, training data items that reflect more realistic scenarios and real-world track models, thus covering a narrower range of possible attributes values or combinations thereof, can be used.

For example, early training proceeds with training data items generated by generative models that provide systematic and synthetically generated attribute values across a plausible range of each respective attribute. This has been described before. In later phases of the training of the ML model, training data items that reflect more realistic, real-world scenarios should be used. Such training data items are generated on the basis of data obtained from measurement or training in the field, or by generative models that provide realistic attribute values with high accuracy, preferably based on interpolation of real-world measurement data. As described previously, such more realistic training data items may then also be regarded as accurate training data, from which derived training data items can be obtained and used for training as explained above.

## VII. Implementation of the ML-model

In one example, the neural network model may be based on a Neural Ordinary Differential Equations (NODE) model and its further developments, such as Augmented Neural ODEs or Second Order Behaviour in Augmented Neural ODEs, which are a specific of family of deep neural network models, e.g., based on an encoder-decoder type framework, where an additional set of ODE input parameters is added to the model and training involves backpropagation through an ODE solver. Such parameterized NODE model is usable for learning latent dynamics of complex dynamical processes that arise in computational physics, which is an essential component for enabling rapid numerical simulations for time-critical physics applications. (Details of neural ODE are described by Kookjin Leea and Eric Parisha in "Parameterized Neural Ordinary Differential Equations: Applications to Computational Physics Problems", Department of Energy's (DOE) Technical Report, which is available at https://www.osti.gov/biblio/1706214.

A neural network may also be a physics-informed neural network, PINN, wherein a loss function is based on a model of motion for determining a velocity v of the moving vehicle and weights in the neural network are adjusted based on a difference between the velocity determined by the loss function and an average velocity obtained from the time series of values of parameters included in a training data item of the training data set.

## VIII. Determining the power loss of a moving vehicle

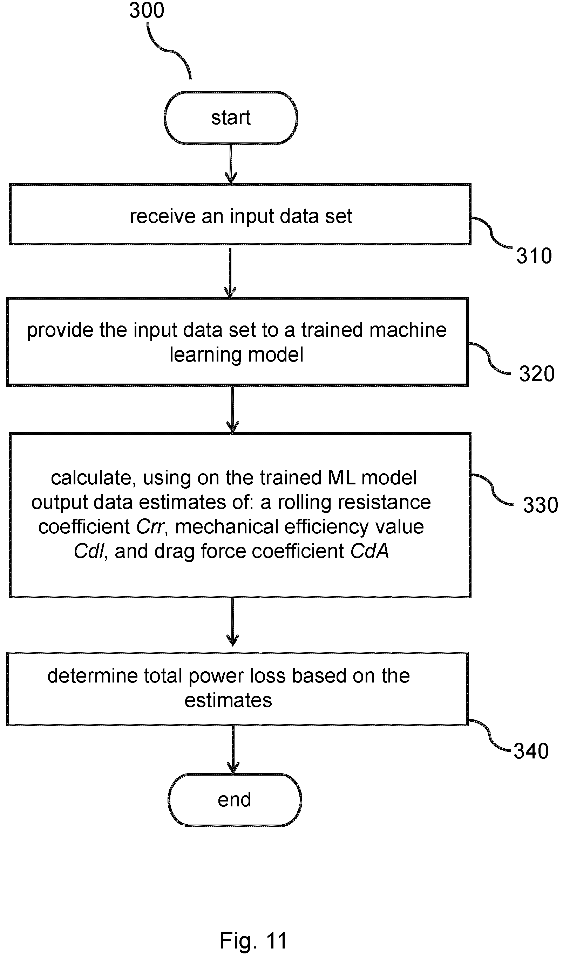

After an ML model is trained as hereinabove and using the training data items described herein, the model can be deployed in different environments, e.g. on a bike computer 662, as described above. The trained model is usable to determine power loss of the moving vehicle as shown in method 300 in Fig. 11.

In step 310 values of input parameters are received comprising: information about the moving vehicle, information related to an environment, in which the vehicle is moving, time series data specifying parameters related to environmental conditions and a physics of the moving vehicle, including a vehicle speed v and a power level P applied to propel the moving vehicle. The time series data is normalized to include values of input parameters at intervals at a predetermined time distance $\Delta t$ and covering a predetermined total duration and the normalization is preferably achieved by interpolation.

The input parameters can comprise a measure of dynamic air pressure specified as an amount of air flow velocity and air flow direction, which is measured in real-time by a measurement instrument, which, preferably, is a pitot tube and mounted on the moving vehicle.

In step 320, the values of input parameters are provided as inputs to the trained machine learning model.

In step 330, output data is calculated using the trained machine learning model. The output data comprises estimates of: a rolling resistance coefficient, $Crr$, a mechanical efficiency value, $Cdl$, a drag force coefficient, $CdA$; and

In step 340, the total power loss is determined based on said estimated values of $Crr$, a mechanical efficiency value, $Cdl$, a drag force coefficient, $CdA$ and the total power applied.

In step 350, which is optional and not shown in Fig. 11, an accuracy of one or more of the output values of $Crr$, $CdA$, and $Cdl$ value is determined based on a statistical distribution of the respective parameter, the statistical distribution being determined as described above for steps 180 and 185 of method 100.

## IX. Experimental data

In the following, experiments and result data is discussed, which demonstrate the advantages and improvement achieved by the technology described, referred to as "ML-solution" herein when compared to conventional approaches, referred to as "standard energy conservation solution" or simply "energy solution", of determining the power loss of a vehicle. The "standard energy conservation solution" was described in the background section with reference to related approaches. The "ML-solution" is implemented using a neural network configured with parameters as described hereinabove and trained using training data generated as described herein.

A difference between a standard energy conservation solution and the ML-solution for determining the aerodynamic drag coefficient ($CdA$) values in two different scenarios: with offline data without wind speed measurement (Case 1) and with online data with wind speed measurement (Case 2).

Case 1: Determining parameters from offline data without wind speed measurement: In this case, the features used for determining the parameters are power (P), distance traveled (ds), mass of bike and rider (m), air density (rho), slope, and energy-conserved $CdA$ value ($cda\_energy$). The outputs are $CdA$, rolling resistance ($Crr$), drivetrain losses ($Cdl$), initial speed ($v0$), and wind speed ($vwind$, $vw$). In both cases, the training data used to train the neural network for the ML model was generated as described hereinabove. Each the training data items reflecting predetermined values for $CdA$, $Crr$, and $Cdl$ across a plausible range of the respective attribute and since each training data item meets the conditions of the simulated physics model, the attributes of each training data item can be accurate, i.e. they accurately describe the physics, irrespective of whether the situation reflected by the training data item is plausible or ever encountered in practice.

The different cases 1 and 2 are motivated by different deployment scenarios of the ML model as follows: Case 1 is a special case for "offline" investigation of bike rides. For example, input data to the ML model could be from a database that includes previously recorded bike rides of a user who wishes to determine *Cdl, CdA,* and *Crr* in an analysis after a bike trip ("offline"). In such case the trained ML-model is deployed, e.g. in a cloud service connected to a database that stores data recorded from past bike trips. The other case, i.e. case 2, is the real-time measurement "online" on a bike, where some wind speed measurement is available using a pitot tube and where users wish to have a real-time analysis and information about *Cdl, CdA,* and *Crr.* In such case, the trained ML-model is deployed in a bike computer, a mobile phone, or a remote server accessed, e.g., via networked mobile communication device.

For case 1, various global and physical parameters are defined, such as window width of 15 seconds for restructuring, time step, mass range, power range, and others. The energy solving of *Crr* is performed by considering the mean of *Crr* and *Cdl* values. Standard deviations for various parameters like window standard deviations for *CdA,* power, wind speed, wind direction, temperature, slope, and pressure are also defined.

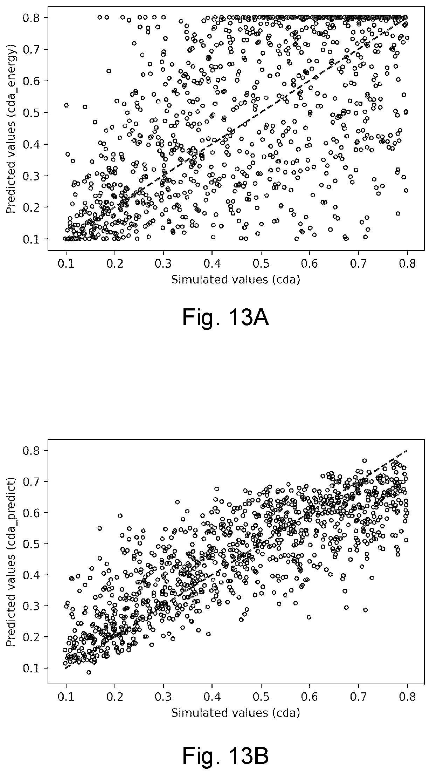

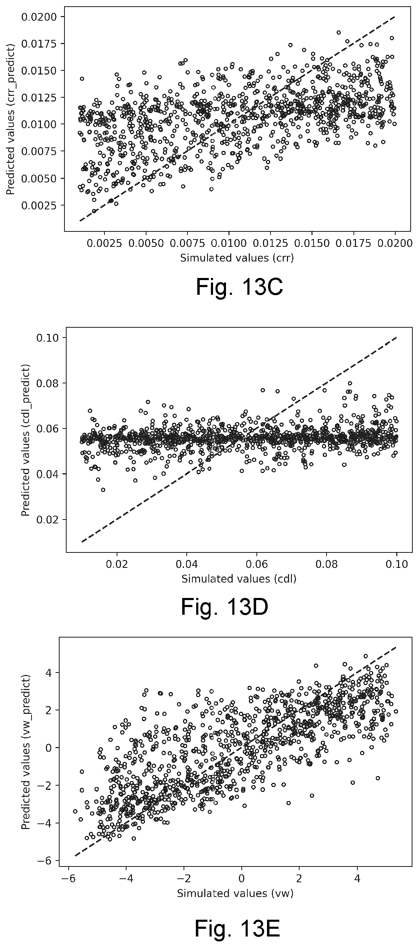

The R2 score showing a correlation between the simulated and predicted values is presented in Figs. 13. Fig. 13A shows simulated vs predicted *CdA* values, the prediction based the conventional solution using the energy conservation principle. The prediction of corresponding values using the ML-based solution presented herein is displayed in Fig. 13B. It should be noted that using the conventional solution based on the energy conservation principle, no solution and prediction for *Cdl, Crr,* and wind speed is possible. To determine the R2 score (R2) and mean average percentage error (MAPE), a simulation of one million samples was conducted in each case. For each sample a corresponding predication was computed using the conventional energy-solution model and using the ML-solution model. The values of R2 in percent are shown in the following tables:

| Metric | ML-Solution | | | |
|---|---|---|---|---|
|  | CdA | Crr | Cdl | vw |
| R2 [%] | 68.6 | 26.4 | 5.2 | 58.6 |
| MAPE [%] | 24.6 | 78.1 | 64.0 | 141.3 |

| Metric | Energy-Solution | | |
|---|---|---|---|
|  | CdA | Crr | Cdl |
| R2 [%] | -4.5 | n/a | n/a |
| MAPE [%] | 40.5 | n/a | n/a |

The plots in Figs 13 and also the table show that the prediction using the ML-based approach described herein is far more precise to the simulated values, which reflect precise values of the physics according to the simulation model, that the conventional prediction. In addition, the ML-based solution enables to obtain precise predictions for *Cdl, Crr,* and wind speed *(vw).*

Case 2: Determining parameters from online data with wind speed measurement. In this scenario, the parameters are determined using features such as power (*P*), distance traveled (ds), mass of bike and rider (*m*), air density (*rho*), slope, wind speed (*vw*), and energy-conserved *CdA* value (*cda_energy*). The output parameters include *CdA,* rolling resistance (*Crr*), drivetrain losses (*Cdl*), and initial speed of the vehicle (*v0*). The neural network used in case 2 has basically the same structure as the network used for case 1, however the structure is not identical. In case 1, the wind speed is determined by neural network, i.e. it is an output parameter, which is not the case for the network in used in case 2.

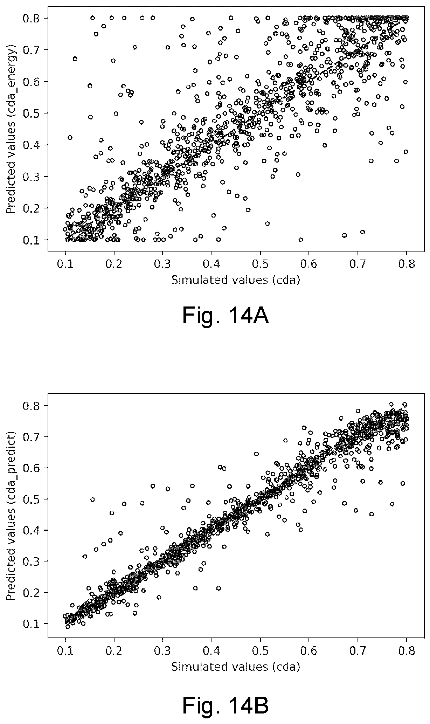

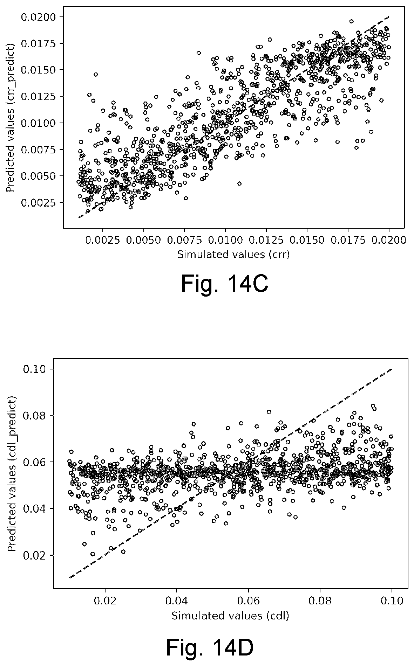

A simulation of 1024 samples was carried out to determine accurate values for the *CdA* and *Crr. For each sample, a predication was computed* using the ML-solution (*cda_predict* and *crr_predict*). The simulated values and predicated values through the ML-model for aerodynamic drag (*CdA*), rolling resistance (*Crr*), and drivetrain losses (*Cdl*) are shown in Figures 14A, 14C, and 14D respectively. For comparison, predictions of *CdA* through a conventional energy-solution method are shown in Fig. 14B.

The values of R2 in percent for each of the data sets shown in Figs. 14 are shown in the following tables:

| Metric | ML-Solution | | |
|---|---|---|---|
|  | *CdA* | *Crr* | *Cdl* |
| R2 [%] | 94.8 | 71.8 | 13.1 |

(continued)

| Metric | ML-Solution | | |
|---|---|---|---|
| | CdA | Crr | Cdl |
| MAPE [%] | 6.9 | 59.4 | 38.7 |

| Metric | Energy-Solution | | |
|---|---|---|---|
| | CdA | Crr | Cdl |
| R2 [%] | 64.9 | | |
| MAPE [%] | 21.4 | | |

In conclusion, the ML-solution demonstrates a significant improvement in R2 and MAPE values for *CdA, Crr,* and *Cdl* compared to the standard energy conservation solution. This indicates that the ML-solution provides a more accurate estimation of these parameters.

The ML-solution without wind speed measurement has been shown to be approximately as accurate in determining the *CdA* value as the energy conservation solution with wind speed measurement. This is a remarkable achievement considering that the AI solution operates without the benefit of wind speed information. It is important to note that the ML-solution used for the experiments makes use only of first stage of a prediction model, which focuses on a 15-second window for analysis.

There is potential for further improvement in the performance of the ML-solution and its accuracy by implementing a second stage prediction model that incorporates a Long Short-Term Memory (LSTM) network. LSTM networks are a type of recurrent neural network (RNN) specifically designed to handle time series data and capture long-range dependencies. By leveraging the LSTM network's capabilities, the AI solution is expected to yield even more accurate estimations of *CdA, Crr,* and *Cdl* values, enhancing its overall effectiveness and outperforming the energy conservation solution.

## X. Reducing the power loss of a moving vehicle

After a power loss and individual factors *Crr, CdA,* and *Cdl* contributing to the total power loss has been determined for a moving vehicle according to the method 300, this information can be used for effectively reducing the power loss of the vehicle following method 400.

In step 410, a power loss is determined.

In step 420, a geometry of the vehicle, a position of the driver of the vehicle, and/or components mounted on the vehicle are adjusted based on the determined power loss.

If the power loss is not acceptable repeat steps 410 and 420.

## XI. Computer implementation aspects

Aspects of this disclosure can be implemented in digital circuits, computer-readable storage media, as one or more computer programs, or a combination of one or more of the foregoing that implement, or include instructions that implement the methods described herein. The computer-readable storage media can be non-transitory, e.g., as one or more instructions executable by a cloud computing platform and stored on a tangible storage device.

In this specification the phrase "configured to" is used in different contexts related to computer systems, hardware, or part of a computer program. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program is said to be configured to perform one or more operations, this means that the computer program includes one or more program instructions that, when executed by one or more computers, causes the one or more computers to perform the one or more operations.

Unless otherwise stated, the foregoing alternative examples are not mutually exclusive, but may be implemented in various combinations to achieve unique advantages. In the foregoing description, the provision of the examples described, as well as clauses phrased as "such as," "including" and "like", should not be interpreted as limiting embodiments to the specific examples; rather, the examples are intended to illustrate only one of many possible embodiments.

**Claims**

1. A computer-implemented method (100) for generating one or more training data items of a training data set to train a machine-learning model for determing, according to the method of claim 8, a power loss of a moving vehicle, the method comprising:

   receiving (110) initial values of parameters of a simulation using a physics model of motion of the moving vehicle, each parameter related to physics of the moving vehicle or an environment of the moving vehicle; generating (120), in a stepwise process and through the simulation, a time series of values of the parameters;

   wherein the parameters are first and second parameters; wherein the simulation uses as input:

   as the first parameters: predetermined values specifying, for the moving vehicle, a mechanical efficiency coefficient *Cdl,* a rolling resistance coefficient *Crr,* and a drag force coefficient *CdA,* wherein the predetermined values are systematically and synthetically generated values across a plausible range of the respective parameter; and as the second parameters: values obtained from measurement or from one or more generative models; and

   wherein the simulation determines at each step of the stepwise process at least a velocity of the moving vehicle at a respective time of the time series and provides as output updated parameters;

   generating (130) the training data item from the time series of values;

   wherein a generated training data item comprises input attributes and target attributes; wherein an aggregation along the time series of values of the first parameters of the simulation are the target attributes; and wherein the time series of values of the second parameters of the simulation are input attributes.

2. The method (100) of claim 1,

   wherein the initial values include an initial speed $v_0$ [m/s] at time *t=0* of the moving vehicle; and/or wherein generating (120) comprises calculating (140) a time series with a time distance $\Delta t$ of output values of a speed *v* and a distance *x* of the moving vehicle based on the physics model of motion; and/or wherein the physics model of motion is based on Newton's equation of motion, which describes an acceleration $\ddot{x}$ of the moving vehicle as a nonlinear differential equation as follows:

$$\ddot{x} = \frac{(P \cdot C_{dl})}{\dot{x} \cdot m} - g \cdot (C_{rr} \cdot \cos(\alpha) - \sin(\alpha)) - \frac{\rho \cdot C_{dA} \cdot (\dot{x} + v_w)^2}{2 \cdot m};$$

   wherein the differential equation is solved using numerical analysis; and/or wherein the numerical analysis is based on solving (150) ordinary differential equations; and/or wherein the second parameters include one or more of:

   - $P$ : power [W] applied to propel the moving vehicle,
   - $\dot{x}$ : vehicle speed [m/s],
   - $vw$ : effective wind speed [m/s in moving direction of the moving vehicle]
   - $m$ : mass [kg] of moving system, including the moving vehicle and a driver of the moving vehicle,
   - $g$ : gravitational acceleration [m/s$^2$],
   - $\rho$ : air density in [kg/m$^3$],
   - $\alpha$ : inclination angle [rad]; and/or

   wherein the predetermined values of the first parameters are selected (131) from a range of values observable in a laboratory or wind tunnel; and/or

wherein the values of second parameters are obtained (132) from one or more of structured testing, measurement in the field, databases including environmental data, or through simulation or interpolation of data obtained therefrom; and/or

wherein the ordinary differential equations are solved using a numerical differential equation solver, which is implemented according to an algorithm of Runge-Kutta or Dormand-Prince.

3. The method (100) of claim 1 or 2, wherein the one or more generative models, which provide time series of parameter values, include at least:

a power model (620) providing one or more parameters for power applied to propel the moving vehicle;
a mechanical efficiency model (622) providing one or more parameters relevant for power loss in the drivetrain of the moving vehicle;
a position model (624) providing one or more parameters relevant for power loss due to wind resistance; and
a track model (626), providing one or more parameters relevant for power loss due to rolling resistance and track properties.

4. The method (100) of one of claims 1 to 3, the method further comprising the step:

augmenting (160) the training data item by including one or more further attributes, not used as parameters in the simulation using the physics model of motion, to obtain an augmented data item, the further attributes including one or more of:

(i) attributes obtained through observation and measurement in the field, including:

○ $\delta$: lean angle [rad] if the moving vehicle is a two-wheeler,
○ one or more attributes relating to a geometry of the moving vehicle including a position of a driver of the moving vehicle,
○ dynamic air pressure specified by an amount of air flow velocity and air flow direction measured by a measurement instrument, which preferably is a pitot tube and mounted on the moving vehicle,

(ii) attributes obtained through the one or more generative models or obtained from observation of real physical systems in a laboratory or wind tunnel, including:

○ $hcom$: height of centre of mass based on the position of the driver and the lean angle,
○ $vwk$: effect of the position of the driver on the dynamic air pressure; and

storing (165) the augmented training data item in the database.

5. The method of claim 4, wherein the effect of the position of the driver on the dynamic air pressure is determined through experimentation in a wind tunnel by:

• varying a geometry of the vehicle or components mounted thereon and/or the position of the driver, and
• based on a known effective windspeed, determining a relation between the position of the driver and the dynamic air pressure, resulting in the effect of the position of the driver on the dynamic air pressure.

6. The method of one of claims 1 to 5,
wherein the generated training item is an accurate training data item;
the method further comprising:

generating (170) one or more derived training data items by applying to one or more accurate training data items one or more of:

(i) modifying (171) the values of an attribute in the time series of values of the accurate training data item within a range of error, wherein the range of error is predetermined through one or more of an accuracy in measuring the attribute, an error due to interpolation of the attribute if the attribute is obtained from a model, and an error due to discretization of the attribute;
(ii) omitting (172) the attribute or
(iii) replacing (173) the attribute value by a value that indicates that no reliable measurement is available;

storing (175) the one or more derived training data items in the database.

7. The method one of claims 1 to 6, further comprising the steps:

determining (180) a statistical distribution of one or more of the *Crr, CdA,* and *Cdl* values based on one or more training data items having at one or more times in the time series of the training data item, except for values of the *Crr, CdA,* and *Cdl* attributes, equivalent values for all other attributes;
storing (185) information about the statistical distribution in the database.

8. A computer-implemented method (300) for determining a power loss of a moving vehicle, comprising:

receiving (310) values of input parameters comprising:

• information about the moving vehicle,
• information related to an environment, in which the vehicle is moving,
• time series data specifying parameters related to environmental conditions and physics of the moving vehicle, including a vehicle speed *v* and a power level *P* applied to propel the moving vehicle;

providing (320) the values of input parameters to a trained machine learning model; and
calculating (330), using the trained machine learning model, output data comprising estimates of:

• a rolling resistance coefficient, *Crr,*
• a mechanical efficiency value, *Cdl,*
• a drag force coefficient, *CdA*; and

determining (340) the total power loss based on the estimates;
wherein the machine-learning model was trained using a training data set generated according to the method of one of claims 1 to 7;
wherein input parameters further comprise a measure of dynamic air pressure specified as an amount of air flow velocity and air flow direction, the measure being determined by a measurement instrument mounted on the moving vehicle.

9. The method (300) of claim 8,

wherein training of the machine-learning model occurs in two consecutive phases,
a first phase using training data items generated by generative models that provide systematically and synthetically generated attributes values across a plausible range of the respective attribute;
a second phase using training data items generated using measurement data or by generative models that provide attribute values with high accuracy, preferably based on interpolation of measurement data.

10. The method (300) of any of claims 8 or 9, wherein the measurement instrument, is a pitot tube.

11. A data processing device comprising a processor adapted to perform the steps of the method for determining power loss of a moving vehicle according to one of claims 8 to 10.

12. A computer program comprising instructions that, when the program is executed by a computer, cause the computer to carry out the steps of the method for determining a power loss of a moving vehicle according to one of claims 8 to 10.

13. A computer-readable medium comprising instructions that, when executed by a computer, cause the computer to carry out the method for determining a power loss of a moving vehicle according to one of claims 8 to 10.

14. Method (400) of reducing power loss of a moving vehicle comprising:
repeating the steps using the principle of trial and error:

determining (410) the power loss of the moving vehicle according to the method any one of claims 8 to 10; and
adjusting (420) one or more of a geometry of the moving vehicle, a position of a driver of the vehicle, and components mounted on the vehicle based on the determined power loss.

**Patentansprüche**

1. Computerimplementiertes Verfahren (100) zum Erzeugen von einem oder mehreren Trainingsdatenelementen eines Trainingsdatensatzes zum Trainieren eines Maschinenlernmodells zum Bestimmen einer Verlustleistung eines sich bewegenden Fahrzeugs gemäß dem Verfahren nach Anspruch 8, wobei das Verfahren umfasst:

    Empfangen (110) von Anfangswerten von Parametern einer Simulation unter Verwendung eines physikalischen Bewegungsmodells des sich bewegenden Fahrzeugs, wobei sich jeder Parameter auf die Physik des sich bewegenden Fahrzeugs oder eine Umgebung des sich bewegenden Fahrzeugs bezieht;
    Erzeugen (120), in einem schrittweisen Prozess und durch die Simulation, einer Zeitreihe von Werten der Parameter;

    wobei die Parameter erste und zweite Parameter sind;
    wobei die Simulation als Eingabe verwendet:

    als die ersten Parameter: vorbestimmte Werte, die für das sich bewegende Fahrzeug einen mechanischen Wirkungsgradkoeffizienten *Cdl*, einen Rollwiderstandskoeffizienten *Crr* und einen Widerstandskraftkoeffizienten *CdA* spezifizieren, wobei die vorbestimmten Werte systematisch und synthetisch erzeugte Werte über einen plausiblen Bereich des jeweiligen Parameters sind; und
    als die zweiten Parameter: Werte, die aus Messungen oder aus einem oder mehreren generativen Modellen erhalten werden; und

    wobei die Simulation bei jedem Schritt des schrittweisen Prozesses mindestens eine Geschwindigkeit des sich bewegenden Fahrzeugs zu einem jeweiligen Zeitpunkt der Zeitreihe bestimmt und als Ausgabe aktualisierte Parameter bereitstellt;

    Erzeugen (130) des Trainingsdatenelements aus der Zeitreihe von Werten;

    wobei ein erzeugtes Trainingsdatenelement Eingangsattribute und Zielattribute umfasst;
    wobei eine Aggregation entlang der Zeitreihe von Werten der ersten Parameter der Simulation die Zielattribute sind; und
    wobei die Zeitreihen der Werte der zweiten Parameter der Simulation Eingangsattribute sind.

2. Das Verfahren (100) nach Anspruch 1,

    wobei die Anfangswerte eine Anfangsgeschwindigkeit $v_0$ [m/s] zum Zeitpunkt *t=0* des sich bewegenden Fahrzeugs umfassen; und/oder
    wobei das Erzeugen (120) das Berechnen (140) einer Zeitreihe mit einem Zeitabstand $\Delta t$ von Ausgangswerten einer Geschwindigkeit *v* und einer Entfernung *x* des sich bewegenden Fahrzeugs auf der Grundlage des physikalischen Bewegungsmodells umfasst; und/oder
    wobei das physikalische Bewegungsmodell auf der Newtonschen Bewegungsgleichung basiert, die eine Beschleunigung $\ddot{x}$ des sich bewegenden Fahrzeugs als eine nichtlineare Differentialgleichung wie folgt beschreibt:

$$\ddot{x} = \frac{(P \cdot C_{dl})}{\dot{x} \cdot m} - g \cdot (C_{rr} \cdot \cos(\alpha) - \sin(\alpha)) - \frac{\rho \cdot C_{dA} \cdot (\dot{x} + v_w)^2}{2 \cdot m};$$

    wobei die Differentialgleichung durch numerische Analyse gelöst wird; und/oder
    wobei die numerische Analyse auf dem Lösen von (150) gewöhnlichen Differentialgleichungen beruht; und/oder
    wobei die zweiten Parameter einen oder mehrere der folgenden Parameter umfassen:

    • *P* Leistung [W], die für den Antrieb des sich bewegenden Fahrzeugs aufgebracht wird,
    • $\dot{x}$ Fahrzeuggeschwindigkeit [m/s],
    • *vw* : effektive Windgeschwindigkeit [m/s in Bewegungsrichtung des sich bewegenden Fahrzeugs]
    • *m* : Masse [kg] des sich bewegenden Systems, einschließlich des sich bewegenden Fahrzeugs und eines Fahrers des sich bewegenden Fahrzeugs,
    • *g* Gravitationsbeschleunigung [m/s$^2$],
    • $\rho$ : Luftdichte in [kg/m$^3$],

• $\alpha$ : Neigungswinkel [rad]; und/oder

wobei die vorgegebenen Werte der ersten Parameter aus einem Bereich von Werten ausgewählt (131) werden, die in einem Labor oder Windkanal beobachtet werden können; und/oder

wobei die Werte der zweiten Parameter aus einem oder mehreren von strukturierten Tests, Messungen im Feld, Datenbanken, die Umweltdaten enthalten, oder durch Simulation oder Interpolation von daraus erhaltenen Daten erhalten werden (132); und/oder

wobei die gewöhnlichen Differentialgleichungen unter Verwendung eines numerischen Differentialgleichungslösers gelöst werden, der nach einem Algorithmus von Runge-Kutta oder Dormand-Prince implementiert ist.

3. Verfahren (100) nach Anspruch 1 oder 2, wobei das eine oder die mehreren generativen Modelle, die Zeitreihen von Parameterwerten bereitstellen, zumindest Folgendes umfassen

ein Leistungsmodell (620), das einen oder mehrere Parameter für die zum Antrieb des sich bewegenden Fahrzeugs aufgebrachte Leistung bereitstellt;

ein mechanisches Wirkungsgradmodell (622), das einen oder mehrere Parameter bereitstellt, die für die Verlustleistung im Antriebsstrang des sich bewegenden Fahrzeugs relevant sind

ein Positionsmodell (624), das einen oder mehrere Parameter liefert, die für die Verlustleistung aufgrund des Windwiderstands relevant sind; und

ein Fahrbahnmodell (626), das einen oder mehrere Parameter liefert, die für die Verlustleistung aufgrund des Rollwiderstands und der Fahrbahneigenschaften relevant sind.

4. Verfahren (100) nach einem der Ansprüche 1 bis 3, wobei das Verfahren ferner den Schritt umfasst:

Erweitern (160) des Trainingsdatenelements durch Einfügen eines oder mehrerer weiterer Attribute, die nicht als Parameter in der Simulation unter Verwendung des physikalischen Bewegungsmodells verwendet werden, um ein erweitertes Datenelement zu erhalten, wobei die weiteren Attribute eines oder mehrere der folgenden umfassen:

(i) Attribute, die durch Beobachtung und Messung im Feld gewonnen wurden, einschließlich:

○ $\delta$ Schräglagenwinkel [rad], wenn das sich bewegende Fahrzeug ein Zweirad ist,

○ ein oder mehrere Attribute, die sich auf die Geometrie des sich bewegenden Fahrzeugs beziehen, einschließlich der Position eines Fahrers des sich bewegenden Fahrzeugs,

○ dynamischer Luftdruck, der durch einen Betrag der Luftströmungsgeschwindigkeit und der Luftströmungsrichtung spezifiziert wird, die von einem Messinstrument gemessen werden, bei dem es sich vorzugsweise um ein Staurohr handelt, das an dem sich bewegenden Fahrzeug angebracht ist,

(ii) Attribute, die durch das eine oder die mehreren generativen Modelle oder durch die Beobachtung realer physikalischer Systeme in einem Labor oder einem Windkanal erhalten werden, einschließlich:

○ *hcom* Höhe des Massenschwerpunkts in Abhängigkeit von der Position des Fahrers und dem Neigungswinkel,

○ *vwk*: Wirkung der Position des Fahrers auf den dynamischen Luftdruck; und

Speichern (165) des erweiterten Trainingsdatenelements in der Datenbank.

5. Verfahren nach Anspruch 4, wobei die Auswirkung der Position des Fahrers auf den dynamischen Luftdruck durch Experimente in einem Windkanal bestimmt wird, indem:

• Variieren einer Geometrie des Fahrzeugs oder der daran montierten Komponenten und/oder der Position des Fahrers, und

• auf der Grundlage einer bekannten effektiven Windgeschwindigkeit eine Beziehung zwischen der Position des Fahrers und dem dynamischen Luftdruck bestimmt wird, woraus sich die Auswirkung der Position des Fahrers auf den dynamischen Luftdruck ergibt.

6. Verfahren nach einem der Ansprüche 1 bis 5,
wobei das erzeugte Trainingselement ein genaues Trainingsdatenelement ist;

wobei das Verfahren weiterhin umfasst:

Erzeugen (170) eines oder mehrerer abgeleiteter Trainingsdatenelemente durch Anwenden eines oder mehrerer der folgenden Punkte auf ein oder mehrere genaue Trainingsdatenelemente:

(i) Modifizieren (171) der Werte eines Attributs in der Zeitreihe von Werten des genauen Trainingsdatenelements innerhalb eines Fehlerbereichs, wobei der Fehlerbereich durch eine oder mehrere von einer Genauigkeit beim Messen des Attributs, einem Fehler aufgrund der Interpolation des Attributs, wenn das Attribut aus einem Modell erhalten wird, und einem Fehler aufgrund der Diskretisierung des Attributs vorbestimmt ist;
(ii) Weglassen (172) des Attributs oder
(iii) Ersetzen (173) des Attributwertes durch einen Wert, der anzeigt, dass keine zuverlässige Messung verfügbar ist;

Speichern (175) der einen oder mehreren abgeleiteten Trainingsdatenelemente in der Datenbank.

7. Verfahren nach einem der Ansprüche 1 bis 6, das ferner die folgenden Schritte umfasst:

Bestimmen (180) einer statistischen Verteilung von einem oder mehreren der Crr-, $CdA$- und Cdl-Werte auf der Grundlage von einem oder mehreren Trainingsdatenelementen, die zu einem oder mehreren Zeitpunkten in der Zeitreihe des Trainingsdatenelements mit Ausnahme der Werte der Attribute $Crr, CdA$ und $Cdl$ äquivalente Werte für alle anderen Attribute aufweisen;
Speichern (185) von Informationen über die statistische Verteilung in der Datenbank.

8. Computer-implementiertes Verfahren (300) zum Bestimmen einer Verlustleistung eines sich bewegenden Fahrzeugs, umfassend:

Empfangen (310) von Werten von Eingabeparametern, die umfassen:

• Informationen über das sich bewegende Fahrzeug,
• Informationen, die sich auf eine Umgebung beziehen, in der sich das Fahrzeug bewegt,
• Zeitreihendaten, die Parameter spezifizieren, die sich auf die Umgebungsbedingungen und die Physik des sich bewegenden Fahrzeugs beziehen, einschließlich einer Fahrzeuggeschwindigkeit $v$ und eines Leistungspegels $P,$ der zum Antrieb des sich bewegenden Fahrzeugs angewendet wird;

Bereitstellen (320) der Werte der Eingangsparameter an ein trainiertes maschinelles Lernmodell; und
Berechnen (330), unter Verwendung des trainierten maschinellen Lernmodells, von Ausgabedaten, die Schätzungen umfassen von:

• eines Rollwiderstandskoeffizienten, $Crr,$
• einen Wert für den mechanischen Wirkungsgradwert, $Cdl,$
• eines Widerstandskraftkoeffizienten, $CdA$; und

Bestimmen (340) der Gesamtverlustleistung auf der Grundlage der Schätzungen;
wobei das maschinenlernende Modell unter Verwendung eines Trainingsdatensatzes trainiert wurde, der gemäß dem Verfahren nach einem der Ansprüche 1 bis 7 erzeugt wurde;
wobei die Eingangsparameter ferner ein Maß des dynamischen Luftdrucks umfassen, das als ein Betrag der Luftströmungsgeschwindigkeit und der Luftströmungsrichtung spezifiziert ist, wobei das Maß durch ein Messinstrument bestimmt wird, das an dem sich bewegenden Fahrzeug angebracht ist.

9. Verfahren (300) nach Anspruch 8,

wobei das Training des maschinenlernenden Modells in zwei aufeinanderfolgenden Phasen erfolgt,
eine erste Phase mit Trainingsdatenelementen, die durch generative Modelle erzeugt werden, die systematisch und synthetisch erzeugte Attributwerte über einen plausiblen Bereich des jeweiligen Attributs liefern;
eine zweite Phase mit Trainingsdatenelementen, die mit Hilfe von Messdaten oder generativen Modellen erzeugt werden, die Attributwerte mit hoher Genauigkeit liefern, vorzugsweise auf der Grundlage von Interpolation von Messdaten.

10. Verfahren (300) nach einem der Ansprüche 8 oder 9, wobei das Messinstrument ein Staurohr ist.

11. Datenverarbeitungsvorrichtung mit einem Prozessor, der geeignet ist, die Schritte des Verfahrens zur Bestimmung der Verlustleistung eines sich bewegenden Fahrzeugs nach einem der Ansprüche 8 bis 10 durchzuführen.

12. Computerprogramm mit Anweisungen, die, wenn das Programm von einem Computer ausgeführt wird, den Computer veranlassen, die Schritte des Verfahrens zur Bestimmung einer Verlustleistung eines sich bewegenden Fahrzeugs nach einem der Ansprüche 8 bis 10 auszuführen.

13. Computerlesbares Medium mit Befehlen, die, wenn das Programm von einem Computer ausgeführt wird, den Computer veranlassen, das Verfahren zur Bestimmung einer Verlustleistung eines sich bewegenden Fahrzeugs nach einem der Ansprüche 8 bis 10 auszuführen.

14. Verfahren (400) zur Verringerung der Verlustleistung eines sich bewegenden Fahrzeugs, umfassend:
    Wiederholung der Schritte nach dem Prinzip von Versuch und Irrtum:

    Bestimmen (410) der Verlustleistung des sich bewegenden Fahrzeugs gemäß dem Verfahren nach einem der Ansprüche 8 bis 10; und
    Einstellen (420) einer oder mehrerer von einer Geometrie des sich bewegenden Fahrzeugs, einer Position eines Fahrers des Fahrzeugs und von an dem Fahrzeug angebrachten Komponenten auf der Grundlage der ermittelten Verlustleistung.

## Revendications

1. Un procédé (100) mis en œuvre par ordinateur, pour générer un ou plusieurs éléments de données d'apprentissage d'un ensemble de données d'apprentissage afin de réaliser l'apprentissage d'un modèle d'apprentissage automatique pour déterminer, selon le procédé selon la revendication 8, une perte de puissance d'un véhicule en mouvement, le procédé comprenant :

    le fait (110) de recevoir des valeurs initiales de paramètres d'une simulation utilisant un modèle physique du mouvement du véhicule en mouvement, chaque paramètre étant lié à la physique du véhicule en mouvement ou à l'environnement du véhicule en mouvement ;
    le fait (120) de générer, dans un processus par étapes et à travers la simulation, une série chronologique de valeurs des paramètres ;

        les paramètres étant des premiers et deuxièmes paramètres ;
        la simulation utilisant en tant qu'entrée :

            en tant que premiers paramètres : des valeurs prédéterminées spécifiant, pour le véhicule en mouvement, un coefficient d'efficacité mécanique *Cdl,* un coefficient de résistance au roulement *Crr* et un coefficient de force de traînée *CdA,* les valeurs prédéterminées étant des valeurs générées de manière systématique et synthétique dans une gamme plausible du paramètre respectif ; et
            en tant que deuxièmes paramètres : des valeurs obtenues à partir de mesures ou d'un ou plusieurs modèles génératifs ; et

        la simulation déterminant à chaque étape du processus par étapes au moins une vitesse du véhicule en mouvement à un moment respectif de la série chronologique et fournissant en sortie des paramètres mis à jour ;

    le fait (130) de générer l'élément de données d'apprentissage à partir de la série chronologique de valeurs ;

        un élément de données d'apprentissage généré comprenant des attributs d'entrée et des attributs cibles ;
        une agrégation le long de la série chronologique de valeurs des premiers paramètres de la simulation étant les attributs cibles ; et
        la série chronologique de valeurs des deuxièmes paramètres de la simulation étant des attributs d'entrée.

2. Le procédé (100) selon la revendication 1,

dans lequel les valeurs initiales comprennent une vitesse initiale *v0* [m/s] à l'instant *t=0* du véhicule en mouvement ; et/ou

dans lequel la génération (120) comprend le fait (140) de calculer une série chronologique avec une distance temporelle Δt de valeurs de sortie d'une vitesse *v* et d'une distance *x* du véhicule en mouvement sur la base du modèle physique de mouvement ; et/ou

dans lequel le modèle physique de mouvement est basé sur l'équation du mouvement de Newton, qui décrit une accélération *ẍ* du véhicule en mouvement sous la forme d'une équation différentielle non linéaire comme suit :

$$\ddot{x} = \frac{(P \cdot C_{dl})}{\dot{x} \cdot m} - g \cdot (C_{rr} \cdot \cos(\alpha) - \sin(\alpha)) - \frac{\rho \cdot C_{dA} \cdot (\dot{x} + v_w)^2}{2 \cdot m};$$

l'équation différentielle étant résolue au moyen d'une analyse numérique ; et/ou

l'analyse numérique étant basée sur le fait (150) de résoudre des équations différentielles ordinaires ; et/ou

les deuxièmes paramètres comprenant un ou plusieurs parmi :

- *P* : puissance [W] appliquée pour propulser le véhicule en mouvement,
- *ẋ* : vitesse du véhicule [m/s],
- *vw* : vitesse effective du vent [m/s dans la direction de déplacement du véhicule en mouvement]
- *m* : masse [kg] du système en mouvement, comprenant le véhicule en mouvement et un conducteur du véhicule en mouvement,
- *g* : accélération gravitationnelle [m/s$^2$],
- $\rho$ : densité de l'air en [kg/m$^3$],
- $\alpha$ : angle d'inclinaison [rad] ; et/ou

les valeurs prédéterminées des premiers paramètres étant sélectionnées (131) à partir d'une gamme de valeurs observables en laboratoire ou en soufflerie ; et/ou

les valeurs des deuxièmes paramètres étant obtenues (132) à partir d'un ou plusieurs essais structurés, de mesures sur le terrain, de bases de données comprenant des données environnementales, ou par simulation ou interpolation des données obtenues à partir de celles-ci ; et/ou

les équations différentielles ordinaires étant résolues en utilisant un solveur d'équations différentielles numériques, qui est mis en œuvre selon un algorithme de Runge-Kutta ou de Dormand-Prince.

3. Le procédé (100) selon la revendication 1 ou la revendication 2, dans lequel lesdits un ou plusieurs modèles génératifs, qui fournissent des séries chronologiques de valeurs de paramètres, comprennent au moins :

un modèle de puissance (620), fournissant un ou plusieurs paramètres pour la puissance appliquée pour propulser le véhicule en mouvement ;

un modèle (622) d'efficacité mécanique, fournissant un ou plusieurs paramètres pertinents pour la perte de puissance dans la transmission du véhicule en mouvement ;

un modèle de position (624), fournissant un ou plusieurs paramètres pertinents pour la perte de puissance due à la résistance au vent ; et

un modèle de tracé (626), fournissant un ou plusieurs paramètres pertinents pour la perte de puissance due à la résistance au roulement et aux propriétés du tracé.

4. Le procédé (100) selon l'une des revendications 1 à 3, le procédé comprenant en outre les étapes suivantes :

le fait (160) d'augmenter l'élément de données d'apprentissage en incluant un ou plusieurs attributs supplémentaires, non utilisés en tant que paramètres dans la simulation utilisant le modèle physique de mouvement, afin d'obtenir un élément de données augmenté, les attributs supplémentaires comprenant un ou plusieurs parmi :

(i) des attributs obtenus par observation et mesure sur le terrain, comprenant :

◦ $\delta$ : angle d'inclinaison [rad] si le véhicule en mouvement est un deux-roues,
◦ un ou plusieurs attributs relatifs à la géométrie du véhicule en mouvement, y compris la position du conducteur du véhicule en mouvement,
◦ la pression atmosphérique dynamique spécifiée par une quantité de vitesse et une direction du flux d'air mesurées par un instrument de mesure, qui est de préférence un tube de Pitot monté sur le véhicule en mouvement,

(ii) des attributs obtenus à partir d'un ou plusieurs modèles génératifs ou obtenus par l'observation de systèmes physiques réels dans un laboratoire ou une soufflerie, notamment :

◦ *hcom* : hauteur du centre de masse en fonction de la position du conducteur et de l'angle d'inclinaison,
◦ *vwk* : effet de la position du conducteur sur la pression dynamique de l'air ; et

le fait (165) de stocker l'élément de données d'apprentissage augmenté dans la base de données.

5. Le procédé selon la revendication 4, dans lequel l'effet de la position du conducteur sur la pression dynamique de l'air est déterminé par expérimentation dans une soufflerie en :

• modifiant la géométrie du véhicule ou des composants montés sur celui-ci et/ou la position du conducteur, et
• déterminant, sur la base d'une vitesse effective connue du vent, une relation entre la position du conducteur et la pression dynamique de l'air, ce qui donne l'effet de la position du conducteur sur la pression dynamique de l'air.

6. Le procédé selon l'une des revendications 1 à 5, dans lequel l'élément d'apprentissage généré est un élément de données d'apprentissage précis ; le procédé comprenant en outre :

le fait (170) de générer un ou plusieurs éléments de données d'apprentissage dérivés en appliquant un ou plusieurs des éléments suivants à un ou plusieurs éléments de données d'apprentissage précis :

(i) modification (171) des valeurs d'un attribut dans la série chronologique de valeurs de l'élément de données d'apprentissage précis dans une gamme d'erreur, la gamme d'erreur étant prédéterminée par un ou plusieurs parmi : une précision dans la mesure de l'attribut, une erreur due à l'interpolation de l'attribut si l'attribut est obtenu à partir d'un modèle, et une erreur due à la discrétisation de l'attribut ;
(ii) omission (172) de l'attribut, ou
(iii) remplacement (173) de la valeur de l'attribut par une valeur indiquant qu'aucune mesure fiable n'est disponible ;

le fait (175) de stocker lesdits un ou plusieurs éléments de données d'apprentissage dérivés dans la base de données.

7. Le procédé selon l'une des revendications 1 à 6, comprenant en outre les étapes suivantes :

déterminer (180) une distribution statistique d'une ou plusieurs des valeurs *Crr, CdA* et *Cdl* sur la base d'un ou plusieurs éléments de données d'apprentissage ayant, à un ou plusieurs moments dans la série chronologique de l'élément de données d'apprentissage, à l'exception des valeurs des attributs *Crr, CdA* et *Cdl*, des valeurs équivalentes pour tous les autres attributs ;
stocker (185) des informations concernant la distribution statistique dans la base de données.

8. Un procédé (300) mis en œuvre par ordinateur, pour déterminer une perte de puissance d'un véhicule en mouvement, comprenant :

le fait (310) de recevoir des valeurs de paramètres d'entrée comprenant :

• des informations sur le véhicule en mouvement,
• des informations relatives à un environnement dans lequel le véhicule se déplace,
• des données de séries chronologiques spécifiant des paramètres liés aux conditions environnementales et à la physique du véhicule en mouvement, y compris une vitesse de véhicule *v* et un niveau de puissance *P* appliqué pour propulser le véhicule en mouvement ;

le fait (320) de fournir des valeurs des paramètres d'entrée à un modèle d'apprentissage automatique ayant fait l'objet d'un apprentissage ; et
le fait (330) de calculer, en utilisant le modèle d'apprentissage automatique ayant fait l'objet d'un apprentissage, des données de sortie comprenant des estimations :

- d'un coefficient de résistance au roulement, *Crr,*
- d'une valeur d'efficacité mécanique, *Cdl,*
- d'un coefficient de force de traînée, *CdA* ; et

le fait (340) de déterminer la perte de puissance totale sur la base des estimations ;
le modèle d'apprentissage automatique a été formé au moyen d'un ensemble de données de formation généré selon le procédé de l'une des revendications 1 à 7 ;
les paramètres d'entrée comprennent en outre une mesure de la pression d'air dynamique spécifiée comme étant une quantité de vitesse d'écoulement d'air et une direction d'écoulement d'air, la mesure étant déterminée par un instrument de mesure monté sur le véhicule en mouvement.

9. Le procédé (300) selon la revendication 8,

dans lequel l'apprentissage du modèle d'apprentissage automatique se déroule en deux phases consécutives, une première phase utilisant des éléments de données d'apprentissage générés par des modèles génératifs qui fournissent des valeurs d'attributs générées de manière systématique et synthétique dans une gamme plausible de l'attribut respectif ;
une deuxième phase utilisant des éléments de données d'apprentissage générés en utilisant des données de mesure ou par des modèles génératifs qui fournissent des valeurs d'attributs avec une grande précision, de préférence sur la base d'une interpolation des données de mesure.

10. Le procédé (300) selon l'une quelconque des revendications 8 ou 9, dans lequel l'instrument de mesure est un tube de Pitot.

11. Un dispositif de traitement de données comprenant un processeur adapté pour mettre en œuvre les étapes du procédé de détermination de la perte de puissance d'un véhicule en mouvement selon l'une quelconque des revendications 8 à 10.

12. Un programme informatique comprenant des instructions qui, lorsque le programme est exécuté par un ordinateur, amènent l'ordinateur à mettre en œuvre les étapes du procédé pour déterminer la perte de puissance d'un véhicule en mouvement selon l'une des revendications 8 à 10.

13. Un support lisible par ordinateur comprenant des instructions qui, lorsqu'elles sont exécutées par un ordinateur, amènent l'ordinateur à mettre en œuvre le procédé pour déterminer la perte de puissance d'un véhicule en mouvement selon l'une des revendications 8 à 10.

14. Procédé (400) de réduction de la perte de puissance d'un véhicule en mouvement comprenant :

le fait de répéter les étapes en utilisant le principe d'essais et d'erreurs ;
le fait (410) de déterminer la perte de puissance du véhicule en mouvement selon le procédé de l'une quelconque des revendications 8 à 10 ; et
le fait (420) d'ajuster un ou plusieurs parmi : la géométrie du véhicule en mouvement, la position du conducteur du véhicule et les composants montés sur le véhicule, sur la base de la perte de puissance déterminée.

start

generate data to train a machine-learning model, ML model, for determining a power loss of a moving vehicle

100

train the ML model using the generated data

200

determining, using the trained ML model, parameters contributing to the power loss of the moving vehicle as output of the ML model, given measured physical parameters as input to the ML model

300

reduce power loss of a moving vehicle based on the parameters output by the trained ML model

400

end

Fig. 1

540

530

520

510

550

560

580

570

585

Fig. 2

Fig. 3

100

start

receive initial values of parameters of a simulation using a physics model of motion of the moving vehicle, each parameter related to physics of the moving vehicle or an environment of the moving vehicle

110

generate, in a stepwise process and through the simulation, a time series of values of the parameters

120

generate the training data item from the time series of values

130

store the generated data item in a database

140

optionally followed by steps 160, 170, and/or 180

Fig. 4

100

augment the training data item by including one or more further attributes, not used as parameters in the simulation using the physics model of motion, to obtain an augmented data item

160

store the augmented data item in the database

165

optionally followed by step 170 and/or 180

Fig. 5

100

generate one or more derived training data items by applying to one or more accurate training data items

modify (171) the values of an attribute in the time series of values of the accurate training data item within a range of error, wherein the range of error is predetermined through one or more of an accuracy in measuring the attribute, an error due to interpolation of the attribute if the attribute is obtained from a model, and an error due to discretization of the attribute171

omit the attribute 172

replace the attribute value by a value that indicates that no reliable measurement is available 173

170

store the derived data item in the database

175

optionally followed by step 180

Fig. 6

100

determine a statistical distribution of one or more of the *Crr*, *CdA*, and *Cdl* values based on one or more training data items having at one or more times in the time series of the training data item, except for values of the *Crr*, *CdA*, and *Cdl* attributes, equivalent values for *all* other attributes

180

store information about the statistical distribution in the database

185

end

Fig. 7

Fig. 8

800 810 820

$t_0$  $t_1$  $t_{n-1}$

| 811 | 812 | ... | 819 | |

$a_0$ $a_1$ $a_2$ $a_{m-1}$

| 821 | 822 | 823 |

Crr    CdA    Cdl

## Fig. 9A

852

853 851

810 830 840 820

Δ
← ? →

## Fig. 9B

200

```
                              ┌──────────┐
                              │  start   │
                              └──────────┘
                                   │
   ┌──────────────────────────────┼
   │    ┌──────────────────────────────────────┐
   │    │ receive an input training data set    │
   │    │ comprising training data items        │  210
   │    └──────────────────────────────────────┘
   │                   │
   │    ┌──────────────────────────────────────┐
   │    │ provide the input attributes of       │
   │    │ training data items to the ML model   │  220
   │    │ for training                          │
   │    └──────────────────────────────────────┘
   │                   │
   │    ┌──────────────────────────────────────┐
   │    │ evaluate a loss function of the ML    │
   │    │ model based on target attributes of   │  230
   │    │ training data item                    │
   │    └──────────────────────────────────────┘
   │                   │
   │    ┌──────────────────────────────────────┐
   │    │ adjust parameters of the ML model     │
   │    │ according to value of loss function   │  240
   │    └──────────────────────────────────────┘
   │                   │
   │   yes         continue
   └───────────┐   training?   250
                   │ no
              ┌──────────┐
              │   end    │
              └──────────┘
```

Fig. 10

300

start

receive an input data set
310

provide the input data set to a trained machine learning model
320

calculate, using on the trained ML model output data estimates of: a rolling resistance coefficient *Crr*, mechanical efficiency value *Cdl*, and drag force coefficient *CdA*
330

determine total power loss based on the estimates
340

end

Fig. 11

400

```
          ┌─────────┐
          │  start  │
          └────┬────┘
               │
   ┌ ─ ─ ─ ─ ─ ▼─ ─ ─ ─ ┐
   │  ┌─────────────────────────────────────────┐
   │  │  determine power loss of the moving vehicle │ ── 410
   │  └─────────────────────────────────────────┘
   │               │
   │               ▼
   │  ┌─────────────────────────────────────────┐
   │  │  adjust one or more of a geometry of the  │
   │  │  vehicle, a position of the driver, and    │ ── 420
   │  │  components mounted on the vehicle based on │
   │  │  the determined power loss                 │
   │  └─────────────────────────────────────────┘
   └ ─ ─ ─ ─ ─ ─ ─ ─│─ ─ ─ ─ ┘
optionally repeat        │
                         ▼
                   ┌─────────┐
                   │   end   │
                   └─────────┘
```

Fig. 12

Fig. 13A

Fig. 13B

Fig. 13C

Fig. 13D

Fig. 13E

Fig. 14A

Fig. 14B

Fig. 14C

Fig. 14D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007051108 A2
- WO 2017197524 A1
- WO 2007038278 A2
- US 8612165 B2